# EUROPEAN PATENT SPECIFICATION

(11) **EP 1 046 113 B1**
(45) Date of publication and mention of the grant of the patent: **22.03.2006**
(21) Application number: 99938552.9
(22) Date of filing: 20.08.1999
(51) Int. Cl.: G06F 17/00

(54) **INSTALLING AND LOADING DEVICE DRIVERS ON AN ENTERTAINMENT SYSTEM**
INSTALLIEREN UND LADEN VON GERÄTETREIBERN AUF EINEM UNTERHALTUNGSSYSTEM
SYSTEME DE DIVERTISSEMENT ET PROCEDE D'ALIMENTATION DE DONNEES, PROCESSEUR DE DONNES ET PROCEDE DE TRAITEMENT DE DONNEES, CONTROLEUR ET PROCEDE DE STOCKAGE DES DONNEES

(30) Priority: 20.08.1998 JP 23460798
(43) Date of publication of application: 25.10.2000
(73) Proprietor: Sony Computer Entertainment Inc., Tokyo 107-0052 (JP)
(72) Inventor: CHATANI, Masayuki, Minato-ku Tokyo 107-0052 (JP)
(74) Representative: Hedley, Nicholas James Matthew
(86) International application number: PCT/JP1999/004486
(87) International publication number: WO 2000/011565

(56) References cited:
- EP-A- 0 718 776
- EP-A- 0 802 486
- US-A- 5 630 076
- US-A- 5 727 205
- US-A- 5 794 032

## Description

### BACKGROUND OF THE INVENTION

### Field of the Invention

This invention concerns a data processor and data processing method, and an entertainment system including such a data processor. In particular, the invention concerns a data processor and data processing method for communication with external function expansion devices. The invention may have application in an entertainment system that employs a video game machine and a non-volatile memory card system.

### Background of the Invention

A home console of a personal computer, etc., can be used with its functions expanded by connecting general-purpose function expansion devices such as a modem or a hard disk meeting the PCMCIA (Personal Computer Memory Card International Association) standard. The device drivers and other software for these function expansion devices are normally supplied by the manufacturer of the function expansion device. Therefore the home console can be connected with various function expansion devices by causing the hard disk drive and other memory devices to hold device drivers for the various function expansion devices to be connected.

Such, personal computers etc. hold on their disk drive etc. the multiple device drivers for the various function expansion devices. In a personal computer, etc., a single hardware resource such as a parallel communication terminal is shared by multiple device drivers. Therefore in such a system, device drivers contend for hardware resources, which interferes with normal operation.

Meanwhile, there are conventional video game machines, such as television game devices, as home consoles. These conventional video game machines, which are widely popular, allow one to play, for example, competitive games by means of operations devices; etc. employing game data, etc. stored in, for example, large-capacity media or auxiliary memory devices and running application programs on the video game machine main unit.

Many of these video game machines generally have superior processing ability for image and voice data, etc. to allow the users to experience complex and realistic images and sounds, etc. Specifically, by making use of their superior data processing capacity, video game machines available heretofore have been able, for example, to display the complex game characters needed for playing games as well as express rich sounds for a sense of presence, providing more-detailed image and sound output than existing computers.

Since its calculational resources are limited, it is difficult for a conventional video game machine to hold device drivers, which are the control programs that control the aforesaid various function expansion devices, and thus it has been impossible to realize connection with various function expansion devices.

Because various function expansion devices are frequently being given faster speed, larger capacity, and greater density, device drivers are supplied that keep up with this upgraded performance. But the problem is that the device drivers must first be held and published in the CD-ROM and other package media by which the application software is supplied in video games, and it is difficult to supply device drivers to keep up with the technical innovations that are constantly taking place in expansion devices.

Various known processing systems are also described in the patent literature.

For example, US-5794032 describes a system for identifying and configuring computer hardware peripherals. The system is intended for application in a personal computer having a CPU, a memory, a floppy disc drive and a CD-ROM drive, in which a floppy disc covers a plurality of driver files respectively for software drivers for different CD-ROM drives. When the disc is loaded, the system identifies the specific CD-ROM drive in the computer and loads the corresponding software drives from the relevant drives file into the main memory.

EP-A-0718776 describes data processing apparatus, such as a personal computer, having an IC card slot for receiving a pseudo IC card connected by a cable to an expansion device. When the card is inserted, identification information for the external device stored on the card is read and a device driver program is loaded from a ROM in the apparatus into a RAM for controlling the operation of the extended device.

US-5727205 discloses a file installation system for a computer system for sequentially retrieving files from media, such as a floppy disc, and determining whether such filed should be copied to an end-user's system.

The above prior art does not address the problem of dealing with plural externally provided expansion devices in a computer system, nor the problem of managing multiple device drivers for the respective function expansion devices. This problem arises in the field of personal computers as well as in the specific field of video games machines, but it is especially pronounced when the device drivers require substantial memory capacity for their storage.

### SUMMARY OF THE INVENTION

It is an object of this invention to avoid the above-described previous problems, and provide a data processor and method as well as an entertainment system, that make it possible to hold multiple device drivers, which are control programs, and send and receive data with various function expansion devices.

According to one aspect of the invention there is provided a data processor having a program data execution function and comprising:
a control means
a main memory means in which data is stored;
a first connection means to which externally provided function expansion devices are connectible;
a second connection means to which an externally provided secondary memory is connectible;
a data supply means for supplying data that includes a plurality of control programs that respectively control said function expansion devices;
and wherein said control means is arranged:
   to transfer to and store in said secondary memory the data that includes said control programs supplied by said data supply means;
   to read via said first connection means identification information for identifying a respective function expansion device connected to said first connection means; and
   in response to said identification information, to request from said secondary memory via said second connection means data including an associated control program for controlling the respective function expansion device and to store the data including said control program in said main memory.

The invention also provides a corresponding method.

In the entertainment system of this invention, data including control programs that control function expansion devices are supplied to the data processing device, and data including these control programs is supplied to and held in the secondary memory.

Also, in the entertainment system of this invention the secondary memory has a data storage means in which are held the control programs and identification information supplied from the data processing device, and held in this data storage means are multiple control programs and identification information corresponding to multiple function expansion devices.

In the entertainment system of this invention, multiple control programs and identification information are supplied to and held in the secondary memory from the data processing device.

Also, in the entertainment system of this invention identification information concerning function expansion devices is supplied from the function expansion devices to the data processing device via the first connection means, and among the control programs held in the data storage means, the control program is supplied that corresponds to the identification information from the function expansion devices.

In the entertainment system of this invention, control programs corresponding to the function expansion devices connected to the data processing device are selected from the secondary memory based on the identification information and are supplied to the data processing device.

In a data supply method of the present invention, a secondary memory is detachably connected to, and performs data transmission and reception with respect to, a data processing device, and control programs which are supplied to the data processing device and control externally provided function expansion devices are supplied to and held in the secondary memory, and the control program that corresponds to the function expansion device connected to the data processing device is retrieved from among the control programs held in the secondary memory, and this control program is supplied to the data processing device.

In this data supply method of this invention, control programs supplied to the data processing device are supplied to and held in the secondary memory. Also, the control program that corresponds to the function expansion device connected to the data processing device is retrieved from among the control programs held in the secondary memory and is supplied to the data processing device.

A data processor of the present invention has a program data execution function comprises a first connection means to which the externally provided function expansion devices are connected; a second connection means to which an externally provided secondary memory is connected; a data supply means for supplying data that includes control programs that control the function expansion devices; a control means that transfers to and stores in the secondary memory the data that includes the control programs supplied by the data supply means; and a main memory means in which data is stored.

In the data processor of the present invention, data including control programs that control function expansion devices is supplied, and data including those control programs is supplied to and held in the secondary memory.

Also, in the data processor of this invention identification information concerning function expansion devices is supplied from the function expansion devices via the first connection means, and among the control programs held in the secondary memory, the control programs that correspond to the identification information from the function expansion devices are supplied.

In the data processor of the present invention, control programs corresponding to connected function expansion devices are selected and supplied from the secondary memory based on the identification information.

The a data processing method of the present invention, data processing is done with the secondary memory connected detachably, and control programs that control externally provided function expansion devices are supplied to and held in the secondary memory, and control programs corresponding to the connected function expansion devices are retrieved from among the control programs held in the secondary memory and are stored.

A data storage controller of the present invention is detachably connected to a data processing device and includes a data storage means that holds control programs that are supplied from the data processing device and control externally provided function expansion devices and identification information that identifies the function expansion devices, and multiple control programs that correspond to multiple function expansion devices and identification information are held in the data storage means.

In the data storage controller of this invention are held multiple control programs and identification information supplied from the data processing device.

Also, the data storage controller of this invention comprises a data retrieval means that retrieves from among the control programs held in the data storage means the control programs that correspond to the function expansion devices, control programs corresponding to the function expansion devices are retrieved by this data retrieval means from among the control programs stored in the data storage means, and these control programs are supplied to the data processing device.

In the data storage controller of this invention, control programs that correspond to the function expansion devices connected to the data processing device are retrieved and supplied to the data processing device based on the identification information.

The data storage control method of the present invention holds control programs that are supplied from the data processing device and control externally provided function expansion devices as well as identification information that identifies the function expansion devices, retrieves from among the held control programs those control programs that correspond to the function expansion devices connected to the data processing device, and supplies them to the data processing device.

### Brief Description of the Drawings

Figure 1 is a block diagram showing a configuration of an entertainment system according to an embodiment of the present invention;
Figure 2 is a block diagram showing a configuration of a hardware layer of a video game machine equipped with the entertainment system of this invention;
Figure 3 is a block diagram showing a configuration of a hardware layer of a memory card that the entertainment system has;
Figure 4 is a block diagram showing a configuration of a hardware layer of a general-purpose interface and an expansion device connected to the video game machine;
Figure 5 is a block diagram showing a configuration of a hardware layer and a software layer of the entertainment system;
Figure 6 is a flowchart of a series of processing in the video game machine, showing the steps by which the video game machine supplies device drivers and identification information to the memory card;
Figure 7 is a flowchart of a series of processing in the memory card, showing the steps by which the video game machine supplies the device drivers and identification information to the memory card;
Figure 8 is a block diagram showing a configuration of the hardware layer and software layer of the entertainment system, a general-purpose interface, and expansion devices in the state in which the device drivers have not been read onto the video game machine;
Figure 9 is a flowchart showing a series of processing in said video game machine, showing the series of steps by which device drivers are supplied from said memory card to said video game machine.
Figure 10 is a flowchart of a series of processing in the memory card, showing the steps by which the device drivers are supplied from the memory card to the video game machine;
Figure 11 is a flowchart of a series of processing in the video game machine, showing the steps until communication takes place with the expansion devices, using the device drivers that are supplied from the memory card to the video game machine;
Figure 12 is a flowchart of a series of processing in the expansion devices, showing the steps until communication takes place with the expansion devices, using the device drivers that are supplied from the memory card to the video game machine;
Figure 13 is a block diagram of a configuration of the hardware layer and software layer of the entertainment system, the general-purpose interface, and expansion devices, in the state in which the device drivers have been read onto the video game machine;
Figure 14 is a top view showing the entertainment system as a specific example of the entertainment system consisting of the video game machine and the memory card;
Figure 15 is a perspective view of the entertainment system;
Figure 16 shows a portable electronic device that is connected to the entertainment system;
Figure 17 is a block diagram of a video game device as a specific example of the video game machine; and
Figure 18 is a block diagram of the portable electronic device.

### DETAILED DESCRIPTION OF THE PREFERRED EMBODIMENTS

### [Preferred Embodiments]

### (A configuration of an entertainment system)

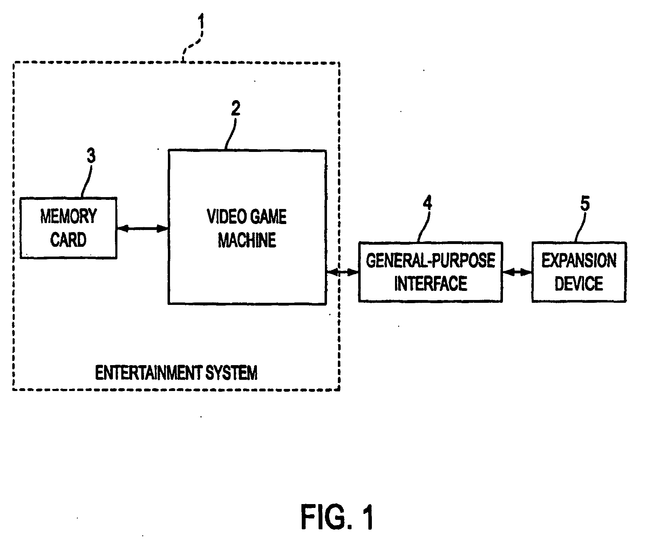

Figure 1 is a block diagram showing the configuration of an entertainment system according to an embodiment of the invention.

As shown in Figure 1, the entertainment system has a video game machine 2 and a memory card 3.

As shown in Figure 1, entertainment system 1 has the video game machine 2, which is a data processing device having the function of executing program data, and memory card 3, which is a secondary memory in which is held data, etc. used by the video game machine 2. Video game machine 2 is constituted as a so-called entertainment device, which executes video games, etc. by executing and processing program data stored on a large-capacity medium (not shown) such as a CD-ROM. Memory card 3 is constituted as an auxiliary storage device of video game machine 2 and is used connected, for example detachably, to video game machine 2. Video game machine 2 transmits and receives data with expansion device 5, which is a function expansion device, via a general-purpose interface 4 such as a SCSI (Small Computer System Interface). Video game machine 2, memory card 3, general-purpose interface 4, and an expansion device 5 are each connected by a connector or cable, etc. (not shown). Expansion device 5 is, for example, a device that expands the functions of video game machine 2, such as a modem, hard disk, flash memory, or mobile telephone.

### (Hardware layer of the video game machine)

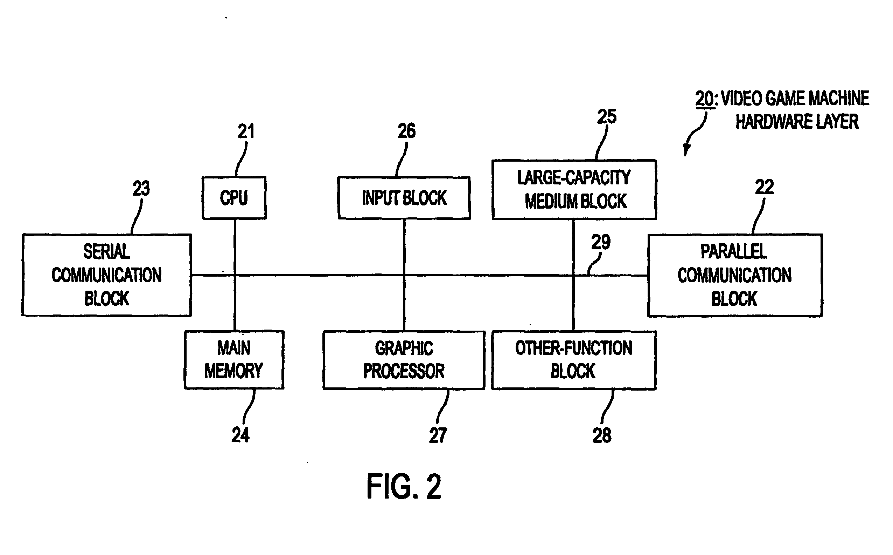

Figure 2 shows hardware layer of the video game machine equipped with the entertainment system.

As shown specifically in Figure 2, a video game machine hardware layer 20 of video game machine 2 has a CPU 21, which has the function of a control means that transfers program data, etc. supplied from a large-capacity medium, etc. (not shown) to memory card 3 and causing it to be held there; a parallel communication block 22, which is a first connection means, to which expansion device 5 is connected; serial communication block 23, which is a second connection means, to which memory card 3 is detachably connected; a main memory 24, which is the main storage means in which is stored data supplied to video game machine 2; and a large-capacity memory block 25, which is a data supply means that reads data from a large-capacity medium, etc. (not shown) and supplies it; in addition, it has an input block 26, a graphic processor 27, and other-function block 28. In this video game machine hardware layer 20, each of these parts is connected to a bus 29.

Parallel communication block 22 is constituted such that it has the function of performing parallel communication with external devices. The parallel communication block 22 has a terminal, etc. (not shown) and can be connected electrically to parallel communication block 42 of general-purpose interface 4 for performing communication with expansion device 5, which is described below, and thereby video game machine 2 is able to transmit and receive data with expansion device 5.

Serial communication block 23 is constituted to have the function of performing serial communication with external devices. The serial communication block 23 has a terminal, etc. (not shown) and can be connected electrically to serial communication block 33 of memory card 3, which is described below, and thereby video game machine 2 is able to transmit and receive data, including program data, with memory card 3.

Main memory 24 is a memory unit that stores various data. Stored in main memory 24, for example as described below, are application programs such as expansion device use application software 100 stored on a CD-ROM or other large-capacity medium (not shown) mounted on large-capacity medium block 25, and device drivers 150, which are supplied from memory card 3 via serial communication block 23. Also stored in main memory 24 is data from expansion device 5 that is transmitted via parallel communication block 22.

Large-capacity medium block 25 has a large-capacity medium (not shown) mounted on it, and this large-capacity medium block 25 has a drive mechanism (not shown) that drives the large-capacity medium. Video game machine 2 controls large-capacity medium block 25 by CPU 21, reads expansion device use application software 100 stored on the large-capacity medium, activates device driver installation software 60 for doing communication with expansion device 5, and reads the control program device driver 150, etc.

Input block 26 is constituted to have functions as an input operation unit. That is, in video game machine 2, the input of, for example, various information by the user can be done by input block 26.

Graphic processor 27 is constituted as a unit that performs image processing of the input data. That is, graphics processing of images to be displayed on, for example, a display unit (not shown) is done by graphic processor 27. Specifically, so-called polygon graphics processing, etc. is done by graphic processor 27.

Other-function block 28 is constituted other than the above blocks; for example, it is constituted to have a power source block, etc. (not shown).

CPU 21 has the function of controlling the above-described blocks. For example, CPU 21 transfers to and causes to be held in memory card 3 the device driver 150, etc. stored on large-capacity medium (not shown) that is supplied by large-capacity medium block 25. Also, CPU 21 controls the input and output of data supplied to video game machine 2 or output from video game machine 2 via parallel communication block 22 or serial communication block 23.

The thus constituted video game machine 2 is able by its nature to play video games based on program data recorded on a CD-ROM or other large-capacity medium.

### (Memory card hardware layer)

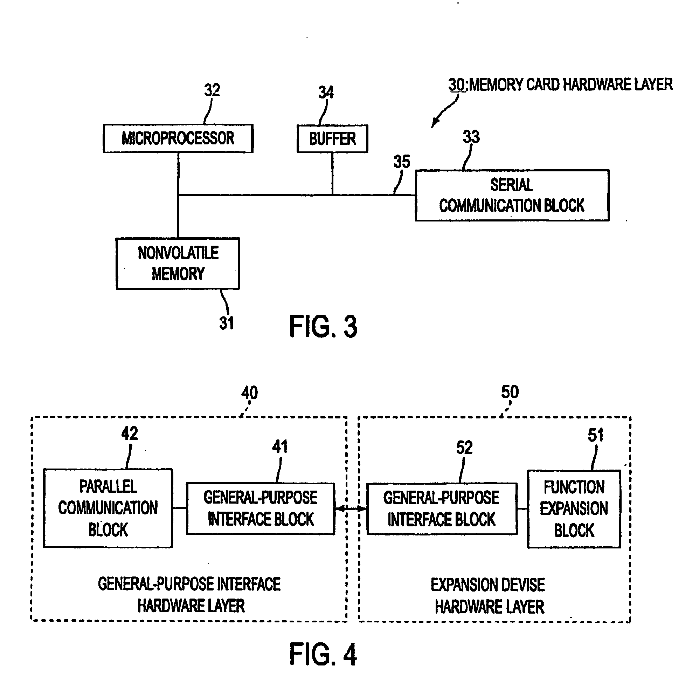

Figure 3 shows the hardware layer of a memory card that the entertainment system has.

As shown specifically in Figure 3, a memory card hardware layer 30 of memory card 3 has a nonvolatile memory 31, which is a program data storage means in which program data input from video game machine 2 is held; and a microprocessor 32, which has the function of a data retrieval means that retrieves from device driver data file 110, which is held in nonvolatile memory 31 and is described below, a device driver 150 for performing data transmission and reception between video game machine 2 and expansion device 5; it also has a serial communication block 33 and a buffer 34. In memory card hardware layer 30, these parts are connected to a bus 35.

Nonvolatile memory 31 is a memory unit in which various data is stored. Stored in this nonvolatile memory 31 is program data such as a device driver data file 110, which is supplied from video game machine 2 via serial communication block 33. Also stored in nonvolatile memory 31, besides program data, is ordinary data supplied from video game machine 2.

Serial communication block 33 is constituted to have the function of performing serial communication with external devices. The serial communication block 33 can be connected electrically to, for example, serial communication block 23 of video game machine 2, thereby making it possible for memory card 3 to transmit and receive data with video game machine 2. Supplied to memory card 3 via this serial communication block 33 is device driver data file 110, etc., which is stored on a large-capacity medium (not shown) mounted on the video game machine 2.

Buffer 34 is a memory unit that is used as the working area for various data. For example, device driver data file 110 or data such as identification information that is supplied from video game machine 2 via serial communication block 33 is stored temporarily in this buffer 34 before it is held in nonvolatile memory 31.

Microprocessor 32 is constituted to have the function of controlling the aforesaid blocks; for example, it controls the input and output of data when data is transmitted and received with video game machine 2. Also, microprocessor 32 retrieves the desired device driver 150 from device driver data file 110 held in nonvolatile memory 31, based on the identification information of expansion device 5 which is connected to video game machine 2.

The card 3, which is formed so as to be detachable with respect to video game machine 2, transmits and receives data from and to video game machine 2. In entertainment system 1, whose hardware layer is thus constituted and which has video game machine 2 and memory card 3, data is transmitted and received between video game machine 2 and expansion device 5 via general-purpose interface 4.

### (General-purpose interface hardware layer)

As shown in Figure 4, an interface hardware layer 40 of general-purpose interface 4 has a general-purpose interface block 41 and a parallel communication block 42. As also shown in Figure 4, an expansion device hardware layer 50 of expansion device 5 has a function expansion block 51 and a general-purpose interface block 52. General-purpose interface 4 is constituted so as to be detachably connectable with parallel communication block 22 of video game machine 2 via parallel communication block 42 and constitutes a communication means when data is transmitted and received between video game machine 2 and expansion device 5 via general-purpose interface block 41. Expansion device 5 is detachably connected to general-purpose interface block 41 of general-purpose interface 4 via general-purpose interface block 52 and provides the video game machine 2, via general-purpose interface 4, identification information for identifying the functions present in function expansion block 51. Here the identification information includes at least information on the type of expansion device 5, such as modem or hard disk, and information identifying the specifications of expansion device 5, such as, in the case of a modem, its communication rate and format.

### (Constituent blocks of the entertainment system)

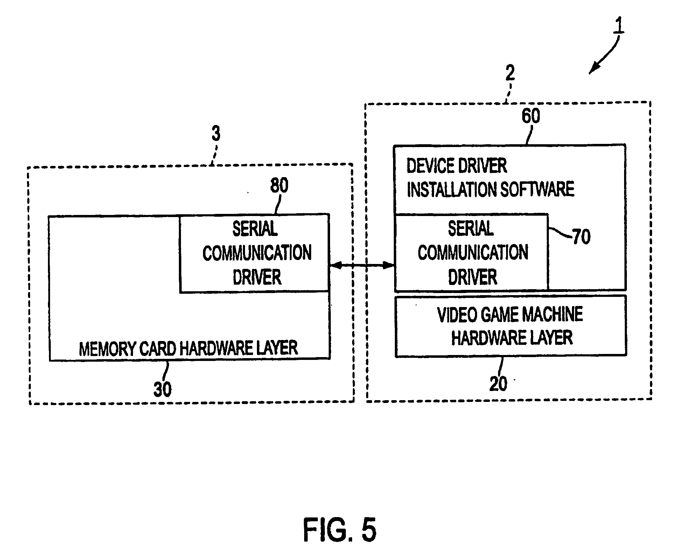

Figure 5 is a block diagram showing the configuration of the hardware layer and software layer of the entertainment system.

In entertainment system 1, the logical relationships when video game machine 2 and memory card 3 are connected and a device driver which allows video game machine 2 to communicate with expansion device 5 is supplied to memory card 3 assumes the structure shown in Figure 5, and data is transmitted and received between video game machine 2 and memory card 3. As its hardware layer, video game machine 2 has the video game machine hardware layer 20. As its software layer, it has a device driver installation software 60 for supplying to memory card 3 the device driver 150 that is read by CPU 21 from a large-capacity medium (not shown) mounted on large-capacity medium block 25, and a serial communication driver 70. Here, aforesaid serial communication block 23 performs data transmission and reception on serial communication driver 70. On the other hand, memory card 3 has aforesaid memory card hardware layer 30 as its hardware layer and a serial communication driver 80 as its software layer. Like video game machine 2, the serial communication block 33 performs data transmission and reception on serial communication driver 80.

### (Series of processing steps in the video game machine)

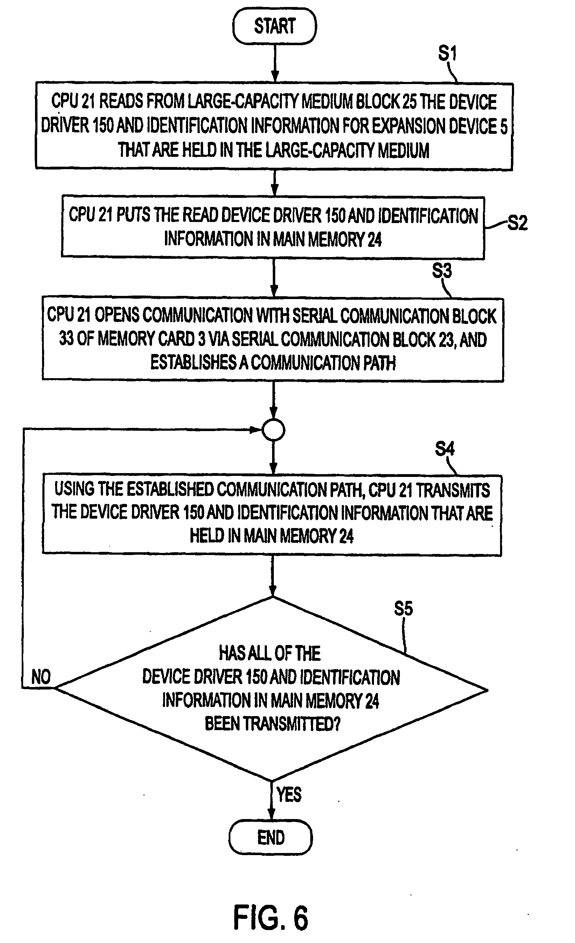

Figure 6 is a flowchart showing a series of steps by which the video game machine supplies device drivers and identification information to the memory card.

In the entertainment system 1, video game machine 2 supplies device drivers 150, which make it possible to communicate with expansion device 5, to memory card 3 by a series of steps such as shown in Figure 6.

As shown in Figure 6, in step S1**,** video game machine 2, by means of CPU 21, activates device driver installation software 60 and reads device driver 150 for expansion device 5 and identification information for identifying said expansion device 5, which are held in the large-capacity medium mounted on large-capacity medium block 25.

Next, in step S2, video game machine 2, by means of CPU 21, puts read device driver 150 and identification information in main memory 24.

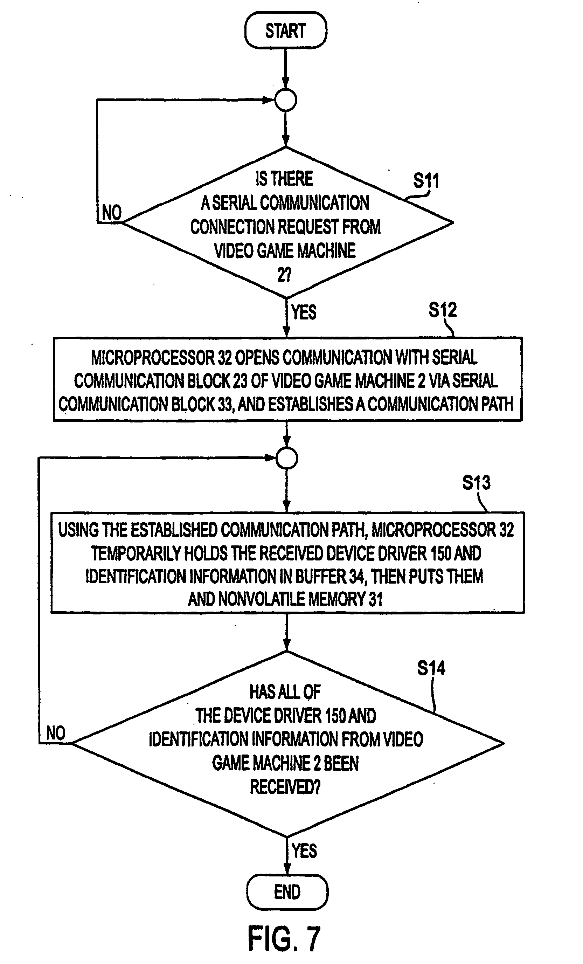

Then, in step S3, video game machine 2, by means of CPU 21, opens communication with serial communication block 33 of memory card 3 via serial communication block 23 and establishes a communication path. The operation of the video game machine in step S3 corresponds to the operation of the memory card in step S12 of Figure 7.

Then, in step S4, video game machine 2 makes use of this established communication path to transmit to memory card 3 the device drivers 150 and identification information held in main memory 24. The operation of the video game machine in step S4 corresponds to the operation of the memory card in step S13 of Figure 7.

In order to confirm whether transmission of device drivers 150 and identification information has terminated, in step S5, video game machine 2 decides, by means of CPU 21, whether all of the device drivers 150 and identification information in main memory 24 have been transmitted. Here, if CPU 21 confirms that all of the device drivers 150 and identification information held in main memory 24 have been transmitted, video game machine 2 terminates execution of device driver installation software 60 and terminates transmission processing of device drivers 150 and identification information. If CPU 21 confirms that not all of the device drivers 150 and identification information held in main memory 24 have been transmitted, video game machine 2 again executes processing beginning with aforesaid step S4.

### (Series of processing steps in the memory card)

Figure 7 is a flowchart showing a series of steps by which the video game machine supplies the device drivers and identification information to the memory card.

Corresponding to the processing by video game machine 2, as shown in Figure 7, in step S11, memory card 3 decides whether there is a serial communication connection request from video game machine 2 and waits.

In step S11, if memory card 3 confirms that there has been a serial communication connection request from video game machine 2, then in step S12, by means of microprocessor 32, it opens communication with serial communication block 23 of video game machine 2 via serial communication block 33 and establishes a communication path. The operation of the memory card in step S12 corresponds to the operation of the video game machine in step S3 of Figure 6 above.

In memory card 3, in step S13, microprocessor 32, using this established communication path, temporarily puts into buffer 34 the device drivers 150 and identification information received from video game machine 2, then puts it into nonvolatile memory 31. The operation of the memory card in step S13 corresponds to the operation of the video game machine in step S4 of Figure 6 above.

Here, the processing done by memory card 3 in these steps S12 and S13 corresponds to the earlier described processing done by video game machine 2 in steps S3 and S4, respectively.

In order to confirm whether reception of device drivers 150 and identification information has terminated, in step S14, memory card 3 decides, by means of microprocessor 32, whether all of the device drivers 150 and identification information from video game machine 2 have been received. Here, if microprocessor 32 confirms that all of the device drivers 150 and identification information from video game machine 2 have been received, memory card 3 terminates reception processing of device drivers 150 and identification information. If microprocessor 32 confirms that not all of the device drivers 150 and identification information from video game machine 2 have been received, memory card 3 again executes processing beginning with aforesaid step S13.

The above described series of processing steps by video game machine 2 and memory card 3 makes it possible in entertainment system 1 for video game machine 2 to supply device drivers 150 and identification information to memory card 3, and to hold device drivers 150 and identification information in memory card 3.

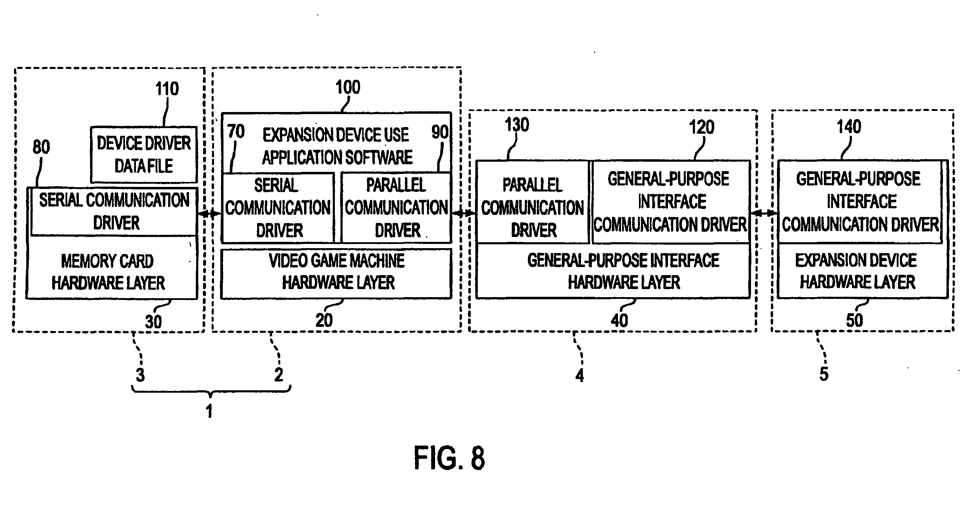

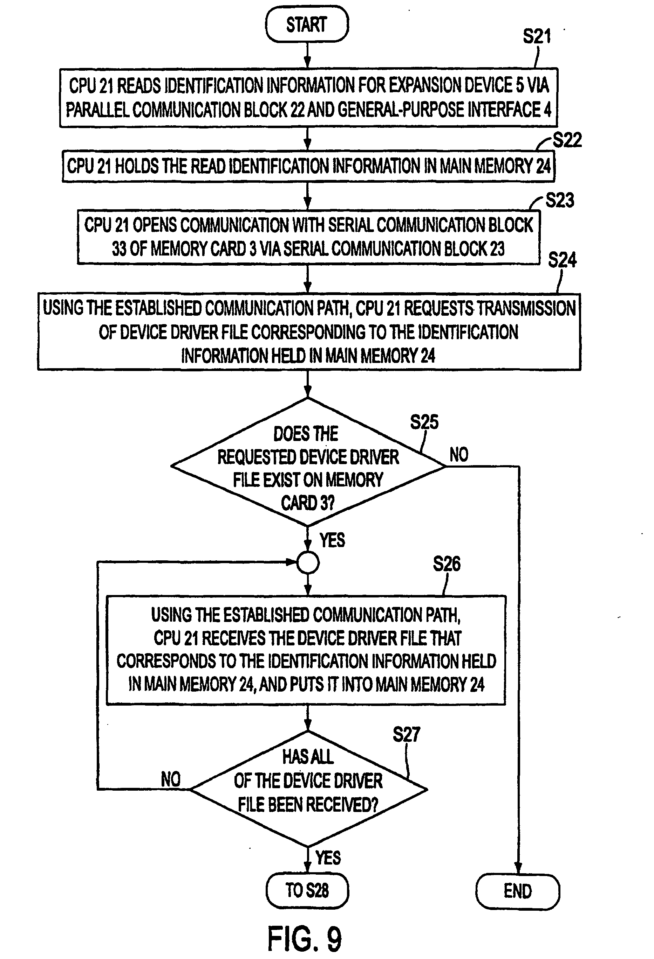

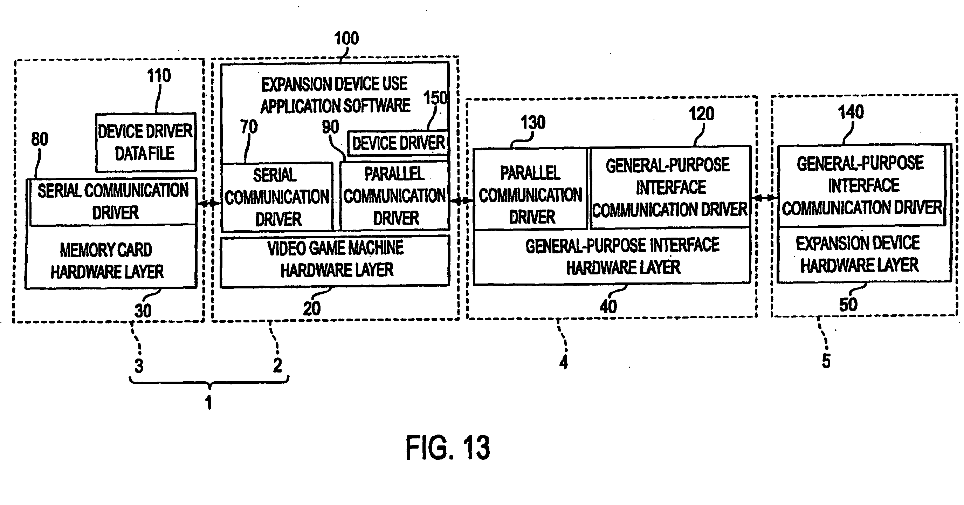

With reference to Figures 9 through 12, the steps will be described until communication is done between video game machine 2 and expansion device 5, and with reference to Figures 8 and 13, the logical relationship between the various hardware at that time will be discussed.

### (Configuration block of entertainment system, general-purpose interface, and expansion devices)

Figure 8 shows the hardware layer and software layer of the entertainment system, a general-purpose interface, and expansion devices in the state in which the device drivers have not been read onto the video game machine.

As shown in Figure 8, video game machine 2 has, as its software block, expansion device use application software 100, which by means of CPU 21 reads from a large-capacity medium (not shown) mounted on large-capacity medium block 25 in order to perform communication with expansion device 5; serial communication driver 70; and a parallel communication driver 90. Here, aforesaid parallel communication block 22 performs data transmission and reception of parallel communication driver 90. Memory card 3, besides the above configuration, has device driver data file 110, which consists of multiple device driver files and identification information supplied from video game machine 2 and held in nonvolatile memory 31.

As shown in Figure 8, general-purpose interface 4 has as its hardware layer the earlier described general-purpose hardware layer 40. As its software layer it has a general-purpose interface communication driver 120 for performing data transmission and reception with expansion device 5, and a parallel communication device 130 for performing data transmission and reception with video game machine 2. Here, the general-purpose interface block 41 and parallel communication block 42 perform data transmission and reception on general-purpose interface communication driver 120 and parallel communication driver 130, respectively. Also, expansion device 5 has as its hardware layer the earlier described expansion device hardware layer 50. As its software layer it has general-purpose interface communication driver 140 for performing data transmission and reception with general-purpose interface 4. The general-purpose interface communication driver 140 controls the operation of aforesaid general-purpose interface block 52.

In the state shown in Figure 8, the video game machine 2 is able to receive expansion device 5 identification information via general-purpose interface 4, but because the device driver 150 that corresponds to the expansion device 5 that is connected to video game machine 2 via general-purpose interface 4 does not exist in the space in main memory 24, expansion device use application software 100 is unable to control expansion device 5.

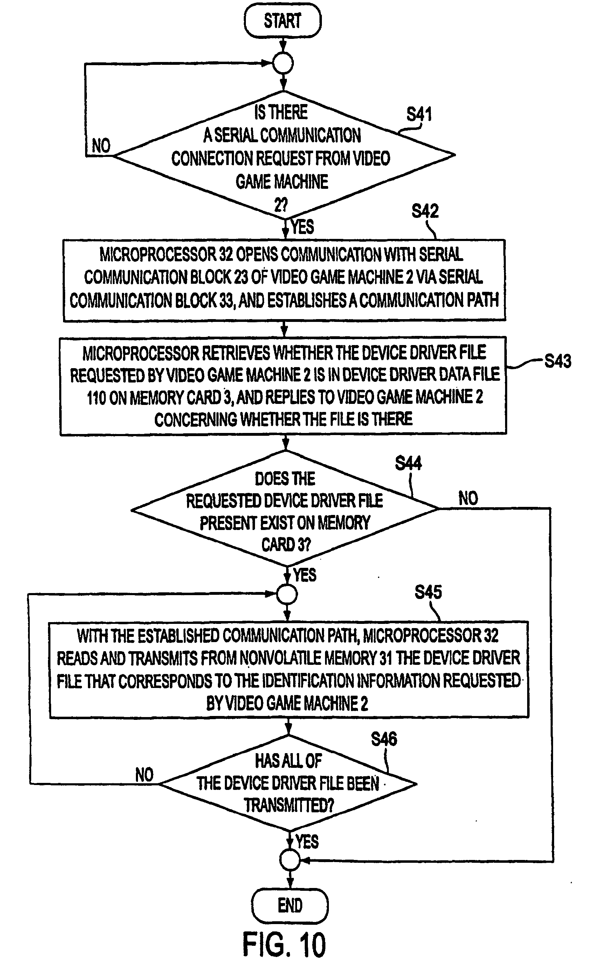

In each hardware having the above-described structure, expansion device use application software 100 is activated on video game machine 2, and by the series of processing shown in Figures 9 and 10, the device driver 150 that corresponds to the expansion device 5 that is connected to video game machine 2 via general-purpose interface 4 is supplied from memory card 3 to video game machine 2.

### (Series of processing steps in the video game machine)

Figure 9 is a flowchart showing a series of processing in said video game machine, showing the series of steps by which device drivers are supplied from said memory card to said video game machine.

As shown in Figure 9, in step S21, video game machine 2 reads by means of CPU 21, via parallel communication block 22 and general-purpose interface 4, the identification information concerning expansion device in function expansion block 51 of expansion device 5.

In step S22, video game machine 2 puts this read identification information into main memory 24 by means of CPU 21.

Next, in step S23, video game machine 2, by means of CPU 21, opens communication with serial communication block 33 of memory card 3 via serial communication block 23, and establishes a communication path. The operation of the video game machine in step S23 corresponds to the operation of the memory card in step S42 of Figure 10 below.

In step S24, using this established communication path, in video game machine 2, CPU 21 makes a request to memory card 3 to transmit the device driver file that corresponds to the device driver 150 that corresponds to the identification information held in main memory 24. The operation of the video game machine in step S24 corresponds to the operation of the memory card in step S43 of Figure 10 below, and an exchange arises between the two.

In the following step S25, the series of processing is terminated if the device driver file requested by video game machine 2 does not exist on memory card 3. On the other hand, if the device driver file requested by video game machine 2 does exist on memory card 3, it proceeds to the following step S26, and video game machine 2, using the communication path established with memory card 3, receives the device driver file by means of CPU 21 and puts it into main memory 24 as device driver 150. The operation of the video game machine in step S26 arises from the operation of the memory card in step S45 of Figure 10 described below.

In step S27, in order to confirm termination of receipt of the device driver file from memory card 3, video game machine 2 decides by means of CPU 21 whether all the data has been received. Here, if CPU 21 confirms that all of the device driver file has been received from memory card 3, video game machine 2 terminates reception processing. And if CPU 21 confirms that not all of the device driver file has been received from memory card 3, video game machine 2 again executes processing from aforesaid step S26.

### (Series of processing steps in the memory card)

Figure 10 is a flowchart showing a series of processing steps in the memory card, where the device drivers are supplied from the memory card to the video game machine.

Corresponding to such processing by video game machine 2, as shown in Figure 10, in step S41, memory card 3 decides whether there is a serial communication connection request from video game machine 2 and waits.

In step S41**,** if it confirms that there has been a serial communication connection request from video game machine 2, then in step S42**,** by means of microprocessor 32, it opens communication with serial communication block 23 of video game machine 2 via serial communication block 33 and establishes a communication path. The operation of the memory card in step S42 corresponds to the operation of the video game machine in step S23 of Figure 9 above.

In memory card 3, in step S43, microprocessor 32 retrieves the device driver file requested by video game machine 2 from within device driver file 110, which consists of multiple device driver files and identification information held in nonvolatile memory 31, and replies to video game machine 2 whether this file exists. The operation of the memory card in step S43 corresponds to the operation of the video game machine in step S24 of Figure 9 above, and an exchange takes place between the two.

In the following step S44, the series of processing is terminated if the device driver file requested from video game machine 2 does not exist within device driver data file 110. On the other hand, if the device driver file does exist within device driver data file 110, it proceeds to the following stop S45, and memory card 3, by means of microprocessor 32, reads the device driver file requested by video game machine 2 from nonvolatile memory 31 and transmits this device driver file to video game machine 2 using the communication path that has been established with video game machine 2. The operation of the memory card in step S45 leads to the operation of the video game machine in step S26 of Figure 9 above.

The processing done by memory card 3 in these steps S42, S43, and S45 corresponds to the above-described processing done by video game machine 2 in steps S23, S24, and S26, respectively.

In step S46 memory card 3 decides by means of microprocessor 32 whether all of the device driver file has been transmitted to video game machine 2. If microprocessor 32 confirms that all of the device driver file has been transmitted, memory card 3 terminates transmission processing. And if microprocessor 32 confirms that not all of the device driver file has been transmitted, memory card 3 again executes processing from aforesaid step S45.

The aforesaid series of processing makes it possible in entertainment system 1 to retrieve, from within device driver data file 110 held in nonvolatile memory 31 of memory card 3, what corresponds to the identification information of expansion device 5 and transmit it to video game machine 2.

### (Series of processing steps in the video game machine)

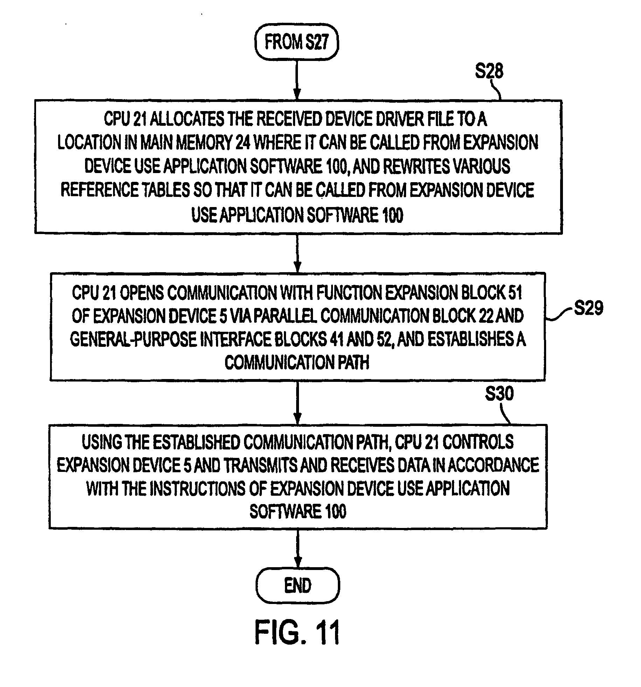

As shown in Figure 11, in step S28, by means of CPU 21, video game machine 2, which has received the device driver file corresponding to expansion device 5, allocates this device driver file to a location in main memory 24 that can be called from expansion device use application software 100, and rewrites the various reference tables stored in main memory 24 so that it can be called from expansion device use application software 100.

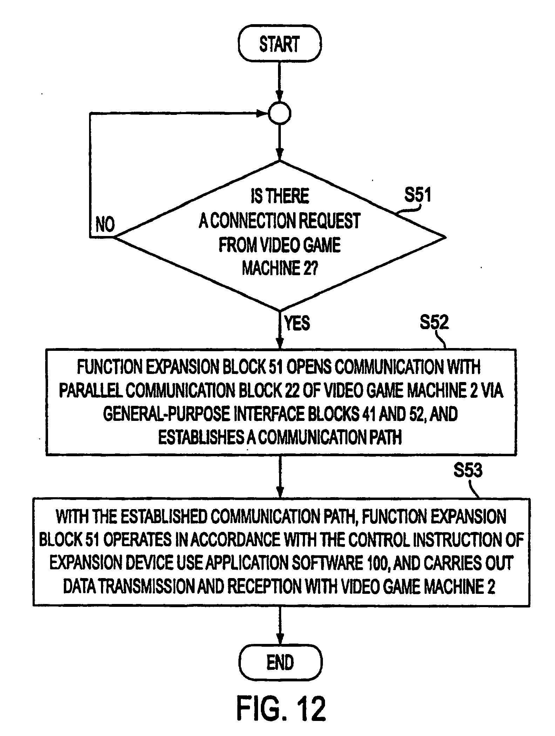

In step S29, in video game machine 2, CPU 21 opens communication with function expansion block 51 of expansion device 5 via parallel communication block 22 and general-purpose interface 4 of video game machine 2 and general-purpose interface blocks 41 and 52 of expansion device 5, and establishes a communication path. The operation of the video game machine in step S29 corresponds to the operation of the expansion device in step S52 in Figure 12 described below.

Video game machine 2, as in step S30, by means of CPU 21, according to the instructions of expansion device use application software 100 and using the established communication path, controls expansion device 5 and performs data transmission and reception. The operation of the video game machine in step S30 corresponds to the operation of the expansion device in step S53 in Figure 12 below.

### (Series of processing steps in the expansion device)

Figure 12 is a flowchart showing a series of processing in the expansion devices, showing the steps until communication takes place with the expansion devices, using the device drivers that are supplied from the memory card to the video game machine.

Corresponding to this processing by video game machine 2, as shown in Figure 12, in step S51, expansion device 5 decides whether there is a connection request from video game machine 2 and waits.

In this step S51, if it is confirmed that there has been a connection request from video game machine 2, then in step S52 expansion device 5 begins communication with function expansion block 51 and parallel communication block 22 of video game machine 2 via general-purpose interface blocks 52 and 41 of expansion device 5 and general-purpose interface 4, and establishes a communication path. The operation of the expansion device in step S52 corresponds to the operation of the video game machine in step S29 in Figure 11.

As in step S53, the expansion device operates in accordance with the control instructions of expansion device use application software 100 received from video game machine 2 using the established communication path, and performs transmission and reception of data with video game machine 2. The operation of the expansion device in step S53 corresponds to the operation of the video game machine in step S30 in Figure 11.

The processing done by expansion device 5 in steps S52 and S53 correspond to the above-described processing done by video game machine 2 in steps S29 and S30, respectively.

### (Configuration block of entertainment system, general-purpose interface, and expansion device)

Figure 13 shows configuration of the hardware layer and software layer of the entertainment system, a general-purpose interface, and expansion devices, in the state in which device drivers have been read onto the video game machine.

In connection with the above series of processing, the logical relationship of each hardware changes as shown in Figure 13. That is, the structure of memory card 3, general-purpose interface 4, and expansion device 5 each remain unchanged, but in video game machine 2, the structure in which device drivers 150 are held in a state linked logically with expansion device use application software 100 is assumed in the space of main memory 24. In entertainment system 1, it is possible to load into main memory 24 and use only the necessary device drivers 150, as for example in a DLL (Dynamic Linking Library) on a personal computer. By device driver 150 being read into main memory 24, device driver 150 can exchange data with parallel communication driver 90 and expansion device use application software 100. Therefore in entertainment system 1 it is possible for expansion device use application software 100 to control expansion device 5 via general-purpose interface 4.

As has been explained above, in entertainment system 1, by reading in from a large-capacity medium (not shown) the device driver 150 that corresponds to expansion device 5 and holding it on memory card 3, mutual connection and communication can be made with many types of expansion devices 5, even in a video game machine 2 that has few computation resources.

In entertainment system 1, by holding multiple device drivers in a single memory card 3, it suffices to use the same memory card 3 even when mutually connecting multiple expansion devices 5 to the video game machine 2.

Moreover, in entertainment system 1, it is possible to use the same application software for many types of expansion devices 5. That is, in entertainment system 1 it is possible, for example, for Internet browser software to use multiple modems of different speeds.

Also, in entertainment system 1, since for example one device driver 150 only is supplied to one hardware resource such as parallel communication block 22 on video game machine 2. Therefore in entertainment system 1, without hardware resources being shared by multiple device drivers, video game machine 2 does not misoperate due to the contention of a single hardware resource being acquired by multiple device drivers.

In entertainment system 1, by device drivers 150 being put into memory card 3 beforehand, one is spared the trouble of installing a device driver 150 in main memory 24 every time expansion device use application software 100 is activated on video game machine 2.

Also in entertainment system 1, since video game machine 2 can be connected with general-purpose interface 4, various expansion devices can be used other than expansion devices 5 manufactured for video game machine 2. Therefore in entertainment system 1, the function expansion of video game machine 2 can be made various and broad.

This invention is not limited to the embodiment described above. In video game machine 2 it is not necessary to store the device drivers 150 and identification information to be supplied to memory card 3 on a large-capacity medium such as a CD-ROM; this may be acquired by, for example, communication with an external source.

Also, in the description, the device driver corresponding to the identification information of expansion device 5 is retrieved by means of microprocessor 32 from a device driver data file 110 held in memory card 3, but as entertainment system 1 one may have a configuration in which CPU 21 of video game machine 2 is given the function of a retrieval means and the retrieval is done by CPU 21.

### [Specific applications to entertainment systems]

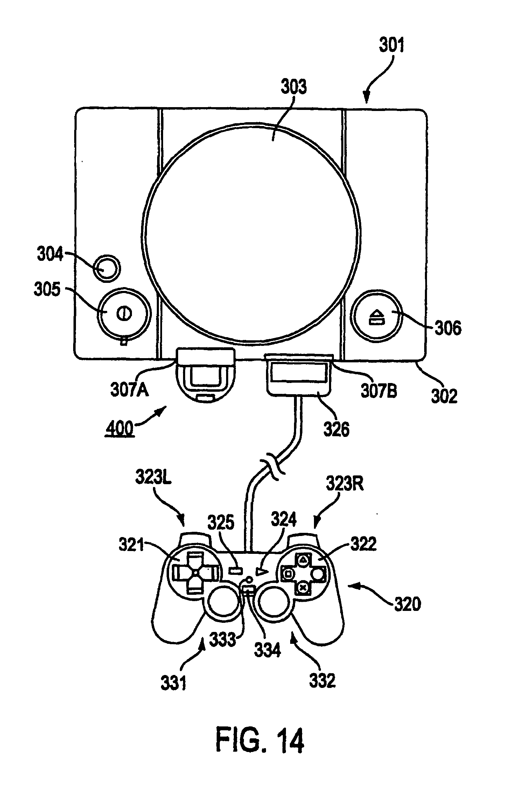

Using Figures 14 through 18, a specific example of the entertainment system 1, is shown. In Figures 14 through 18, video game machine 2 and memory card 3, which include the above-described entertainment system 1, are constituted as an entertainment system consisting of a video game device 301, a portable electronic device 400, and a memory card device 500.

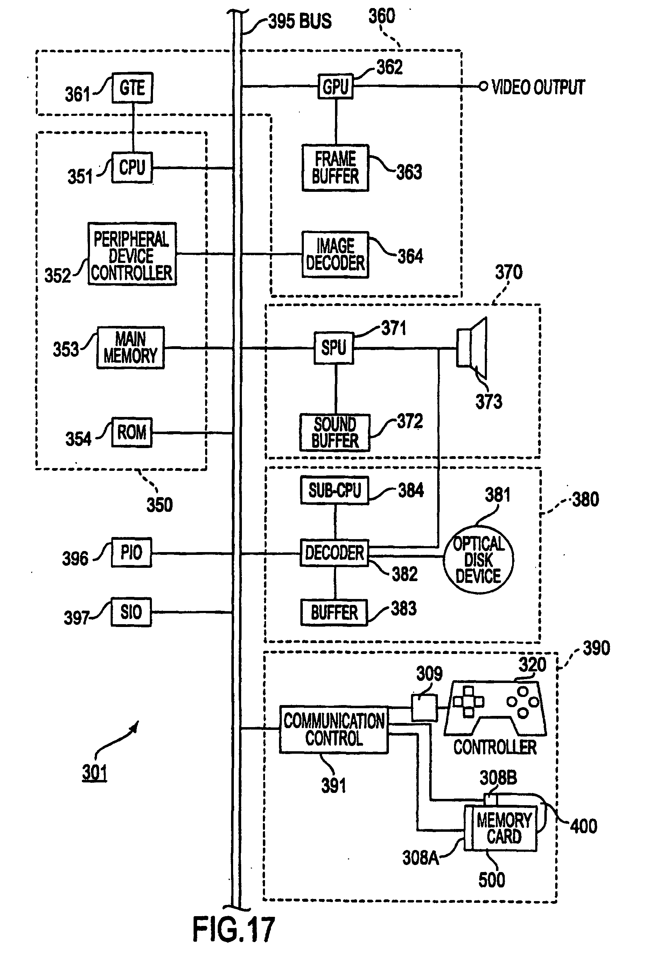

The video game machine 2 corresponds to video game device 301, and memory card 3 corresponds to memory card device 500. Specifically, with regard to the correspondence between video game machine 2 and video game device 301, CPU 21, parallel communication block 22, serial communication block 23, main memory 24, and large-capacity medium block 25 of above-described video game machine 2 correspond respectively to a CPU 351, a parallel I/O interface (PIO) 396, memory card insertion units 308A and 308B, a main memory 353, and an optical disk control unit 380 of video game device 301 shown in Figure 17.

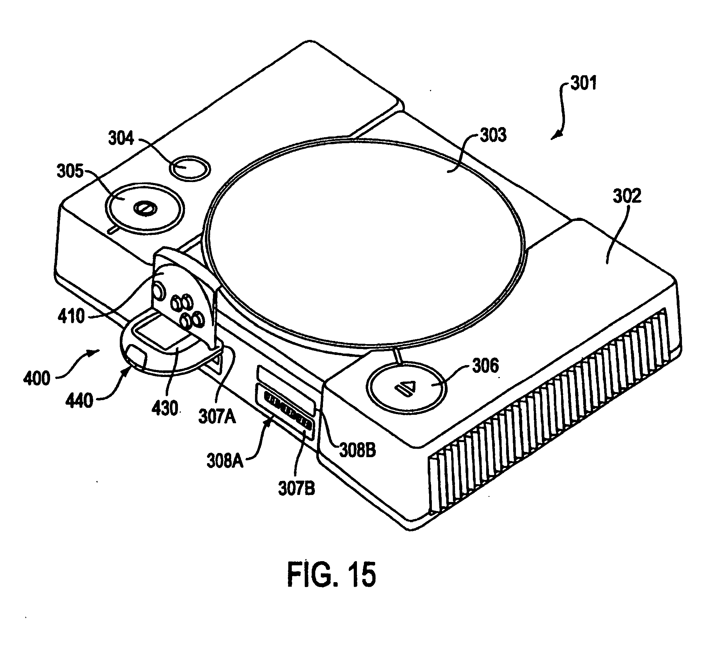

As, shown in Figures 14 and 15, video game device 301 is for reading application programs stored on a large-capacity medium and executing them in accordance with instructions from users (game players). Here, to execute a game means mainly, for example, to control the progress, display, and sounds of the game.

Main unit 302 of video game device 301 is housed in a roughly rectangular cabinet and has disk mounting unit 303, in the middle of which is mounted an optical disk of a CD-ROM, etc., which is a large-capacity medium for supplying video game and other application programs; set switch 304 for arbitrarily resetting the video game; power switch 305; disk operation switch 306 for operating said optical disk; and two slots 307A and 307B.

Also, video game device 301 is constructed so that not only application programs are supplied from a large-capacity medium but also so that they are supplied via a communication circuit.

A portable electronic device 400 and a controller 320 can be connected to slots 307A and 307B. In addition, a memory card device 500 can also be connected to slots 307A and 307B.

Controller 320 has first and second operation units 321 and 322; a left button 323 L; a right button 323 R; a start button 324; a selection button 325; analog-operable operation units 331 and 332; a mode selection switch 333, which selects the operation mode of operation units 331 and 332; and a display unit 334 for displaying the selected operation mode. Also, built into controller 320 is a vibration-causing mechanism (not shown). This vibration-causing mechanism causes controller 320 to vibrate in accordance with, for example, the progress of the video game. Controller 320 is electrically connected to slot 307B of main unit 302 by connection unit 326.

For example by connecting two controllers 320 to slots 307A and 307B, two players can share this entertainment system; that is, for example, competitive games can be played. Also, slots 307A and 307B are not thereby limited to two systems.

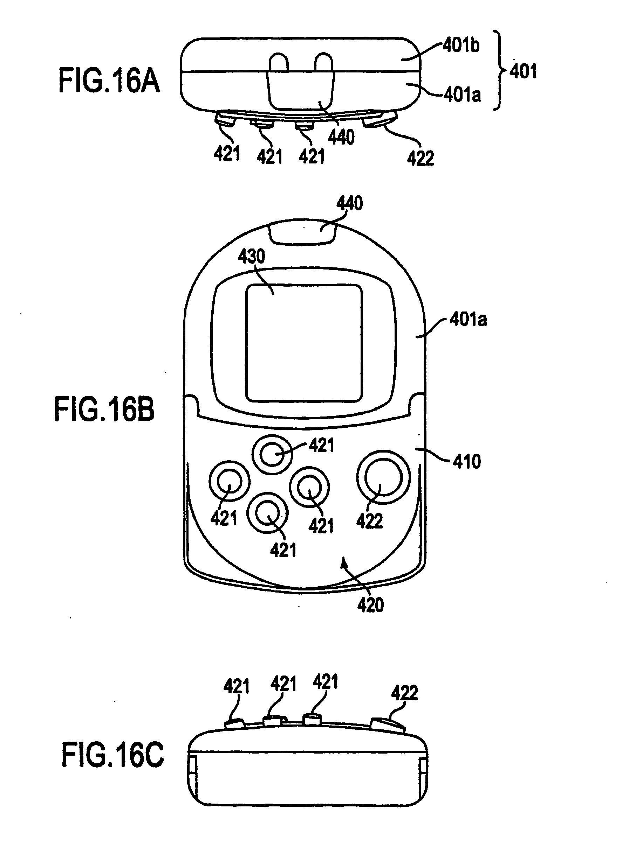

As shown in Figures 16A through 16C, portable electronic device 400 is constructed so as to have a housing 401, and it is equipped with an operation unit 420 for input of various information; a display unit 430, which consists of, for example, a liquid crystal display (LCD); and a window unit 440 for performing wireless communication by means of wireless communication means 448, for example, by infrared rays.

Housing 401, which consists of an upper shell 401a and a lower shell 401b, house inside it a circuit board containing memory elements, etc. The housing 401 is shaped so as to be insertable into slots 307A and 307B of main unit 302 of video game device 301.

Window unit 440 is provided on the other end of housing 401, which has a roughly semicircular shape. Display unit 430 occupies roughly half the area of upper shell 401a, which makes up part of housing 401, and is provided in a position near window unit 440.

Like window unit 440, operation unit 420, which has one or more operation elements 421, 422 for performing various event input and making selections, is formed on upper shell 401a and occupies roughly half its area opposite window unit 440. The operation unit 420 is constructed on cover member 410, which is supported rotatably with respect to housing 401. Here, operation elements 421, 422 are arranged extending from the upper surface side to the lower surface side of this cover member 410 and go through this cover member 410. Also, operation elements 421, 422 are supported by cover member 410, which is made to be movable in the emerging-submerging direction with respect to the top surface part of cover member 410.

Portable electronic device 400, which is inside housing 401, has a circuit board positioned opposite the position in which cover member 410 is arranged, and has on this circuit board a switch pressing unit. The switch pressing unit is provided in a position that corresponds to operation elements 421, 422 when cover member 410 is closed. Thus when operation elements 421, 422 are pressed, the switch pressing unit presses a pressure switch such as a diaphragm switch.

As shown in Figure 15, portable electronic device 400, in which operation unit 420, etc. is thus formed in cover member 410, is mounted in main unit 302 of video game device 301 in the condition in which cover member 410 is open.

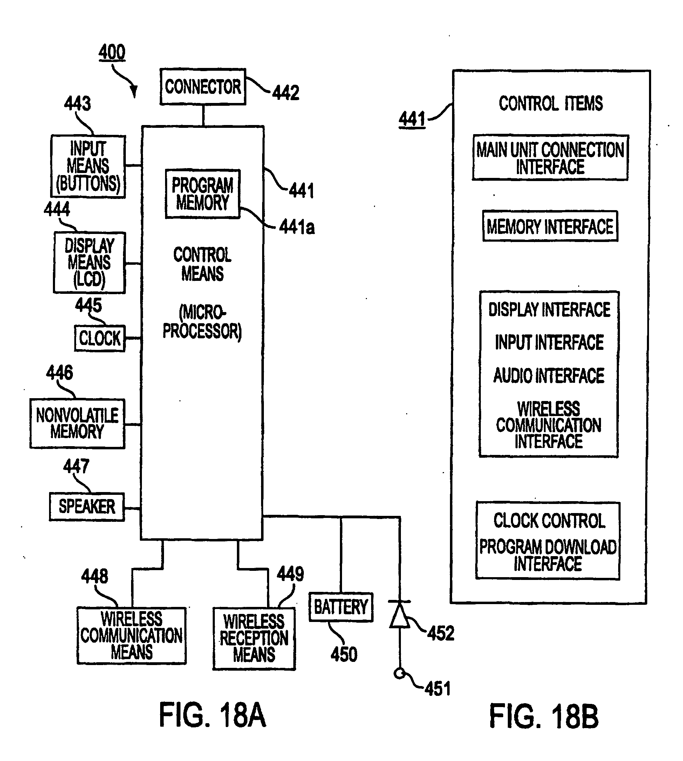

The circuit construction of video game device 301 and portable electronic device 400 is constituted as shown in Figure 17 and Figure 18.

As shown in Figure 17, video game device 301 has a control system 350, which includes a central processing unit (CPU) 351 and its peripheral devices; a graphic system 360, which includes a graphic processing unit (GPU) 362, which draws to a frame buffer 363; a sound system 370, which includes a sound processing unit (SPU), which generates music and sound effects; optical disk controller 380, which controls an optical disk on which application programs are stored; a communication controller 390, which controls the input and outputs signals from controller 320, to which instructions from users are input, and of data from memory card device 500, which stores game settings, etc., and portable electronic device 400; a bus 395, to which the above-described parts are connected; and parallel I/O interface (PIO) 396 and serial I/O interface (SIO) 397, which constitute interfaces with other devices.

Control system 350 has CPU 351; a peripheral device controller 352, which controls direct memory access (DMA) transfers; a main memory 353, which consists of random access memory (RAM); and a read only memory (ROM) 354 in which are stored programs such as the so-called operating system, which manages main memory 353, the graphic system 360, the sound system 370, etc.

CPU 351 controls all of this video game device 301 by executing the operating system stored in ROM 354.

For example, in this video game device 301, when the power is turned on, CPU 351 of control system 350 executes the operating system stored in ROM 354, and thereby CPU 351 controls graphic system 360, sound system 370, etc. For example, when the operating system is executed, CPU 351 initiates all of video game device 301, including confirmation of operation, then controls optical disk controller 380 and executes the application program stored on the optical disk. By execution of this application program, CPU 351, in accordance with input from the users, controls graphic system 360, sound system 370, etc. and controls the display of images and the generation of sound effects and music.

CPU 351 corresponds to CPU 21 in the above-described video game machine 2; that is, it performs restoration processing on the data received and transmitted by portable electronic device 400.

Graphic system 360 has, for example, the function of graphic processor 15 of the above-described video game machine 2. This graphic system 360 has geometry transfer engine (GTE) 361, which does processing such as coordinate transformations; GPU 362, which draws in accordance with drawing instructions from CPU 351; frame buffer 363, which stores images drawn by this GPU 362; and image decoder 364, which decodes image data compressed and encoded by orthogonal transformations such as discrete cosine transformations.

GTE 361 has, for example, a parallel computation mechanism that executes multiple operations in parallel, and is able to perform at high speed such calculations as coordinate transforms, light source calculations, and matrix or vector calculations in response to calculation requests from CPU 351. Specifically, in the case of operations in which flat shading is done, in which, for example, a single-triangle polygon is drawn with the same color, this GTE 361 is able to perform coordinate calculations for up to about 1.5 million polygons per second, thereby both reducing the burden on CPU 351 and performing high-speed coordinate operations by this video game device 301.

GPU 362 draws polygons, etc. to frame buffer 363 in accordance with drawing instructions from CPU 351. The GPU 362 is able to draw up to about 360,000 polygons per second.

Frame buffer 363, which consists of so-called dual-port RAM, is able to simultaneously carry out drawing from GPU 362 or transfers from main memory 353, and reading for the sake of display. This frame buffer 363 has a capacity of, for example, 1 megabyte and can handle a matrix consisting of 1024 pixels horizontally and 512 pixels vertically, each pixel being 16 bits.

The frame buffer 363 has, besides a display region that is output as video output, a CLUT region in which is stored a color look-up table (CLUT) that is referred to when GPU 362 draws polygons, etc., and a texture region in which is stored the texture that is coordinate-transformed and mapped into polygons, etc. drawn by GPU 362 when drawing is done. These CLUT and texture regions dynamically change as the display region changes.

Image decoder 364 decodes the image data of still pictures or moving pictures stored in main memory 353 and stores the result into main memory 353, under control from CPU 351. The image data generated here can be used as background for images drawn by GPU 362, by storing it into frame buffer 363 via GPU 362.

Sound system 370 has a SPU 371, which generates music and sound effects based upon instructions from CPU 351; a sound buffer 372, in which waveform data, etc. is stored by SPU 371; and a speaker 373, which outputs the music and sound effects generated by SPU 371.

SPU 371 has, for example, an ADPCM (adaptive differential PCM) decoding function, which generates audio data in which 16-bit audio data is adaptively encoded as 4-bit difference signals; a playback function that plays back sound effects, etc. by playing back the waveform data stored in sound buffer 372; and a modulation function, which modulates and plays back the waveform data stored in sound buffer 372.

Sound system 370 can be used as a so-called sampling sound source, which generates music and sound effects based on waveform data stored in sound buffer 372 under instructions from CPU 351.

Optical disk controller 380 has an optical disk device 381, which plays back the application programs and data, etc. stored on a CD-ROM or other optical disk; a decoder 382, which decodes programs and data, etc. that have been stored, for example, with an added error correction code (ECC); and a buffer 383, which speeds up the reading of data from the optical disk by temporarily storing data from optical disk device 381. A sub-CPU 384 is connected to decoder 382.

As audio data read by optical disk device 381 and stored on optical disk, there is, besides the above-described ADPCM data, so-called PCM data, in which an analog/digital transformation is performed on audio signals. As an example of ADPCM data, audio data in which the differences of 16-bit digital data are expressed in 4 bits and recorded is decoded by decoder 382, then it is supplied to SPU 371, then digital/analog processing is carried out on it by SPU 371, then it is used for driving speaker 373. As an example of PCM data, audio data recorded as 16-bit digital data is decoded by decoder 382 then is used for driving speaker 373.

Communication controller 390 includes a communication controller 391, which controls communication with CPU 351 via bus 395; and a controller connection unit 309, to which is connected controller 320, which inputs instructions from the user, on communication controller 391, which performs communication control of memory card insertion units 308A and 308B shown in Figure 15, to which are connected memory card device 500 and portable electronic device 400 as auxiliary memory devices that store game settings data, etc.

In the above-described composition, video game device 301 is able to have the same function as the above-described video game machine 2.

That is, video game device 301 transmits to memory card device 500, via communication controller 391, device driver 150 and identification information for expansion device 5 that are stored on a large-capacity medium, etc. And video game device 301 stores into main memory 353 the device driver 150 transmitted from memory card device 500 via communication controller 391.

With regard to portable electronic device 400, as shown in Figure 18A, it has a control means 441; a connector 442; an input means 443; a display means 444; a time function unit 445; a nonvolatile memory 446; a speaker 447; a wireless communication means 448 and a wireless reception means 449 as data transmission and reception means; a battery 450; a battery terminal 451, which comprises a power storage means; and a diode 452.

Control means 441 consists of, for example, a microprocessor (labeled as such in the diagram). This control means 441 has inside it a program memory unit 441a, which is a program storage means.

Connector 442 is so constructed as to connect to a slot in another information device, etc.

Input means 443 consists of operation buttons for operating a stored program.

Display means 444 has and consists of a liquid crystal display (LCD), etc., which displays various information.

Time function unit 445 is constructed so as to display the time; for example, it displays the time on display means 444.

Nonvolatile memory 446 is an element for storing various data. For example, nonvolatile memory 446 may use a semiconductor memory element, such as a flash memory, in which the stored state remains even if the power is turned off.

Since this portable electronic device 400 has a battery 450, one may use as nonvolatile memory 446 a static random access memory (SRAM), which allows data to be input and output at high speed.

Because it has battery 450, portable electronic device 400 can operate independently even when detached from slots 307A and 307B in main unit 302 of video game device 301.

Battery 450 is, for example, a rechargeable secondary battery. With portable electronic device 400 inserted into slots 307A and 307B of video game device 301, a power source is supplied to this battery 450 from video game device 301. In this case, with the connection terminal of battery 450, power source terminal 451 is connected to the connection terminal of battery 450 via diode 452 to prevent reverse current, and power is supplied when main unit 302 of video game device 301 is connected.

Wireless communication means 448 is constructed as a part that performs data communication with external devices, by infrared rays, etc. Also, wireless communication means 448 is constructed as a part that receives various data transmitted from memory card device 500, etc.

Wireless reception means 449 is constructed as a part that receives various data transmitted by, for example, wireless broadcasting.

Speaker 447 is constructed as a sound generation means that generates sound in accordance with a program, etc.

The above-described parts all are connected to control means 441 and operate in accordance with control by control means 441.

The control items of control means 441 are as shown in Figure 18B; control means 441 has a main unit connection interface to information devices, a memory interface for inputting and outputting data to memory, a display interface, an operation input interface, an audio interface, a wireless communication interface, a time control, and a program download interface.

Constituted as described above, portable electronic device 400, by being equipped with input means 443, such as button switches, for operating the program that is executed and display means 444, which makes use of, for example, a liquid crystal display (LCD), also functions as a portable game device when a game application is run.

Moreover, with this portable electronic device 400, having as it does the function of storing application programs, etc. downloaded from the main unit of video game device 301 in program memory unit 441a in microprocessor 441, it is easy to change the application programs and the various driver software that run on portable electronic device 400.

The foregoing is an entertainment system as an example of a specific composition of video game machine 2 and memory card 3 constituting an application of the invention.

Thus entertainment system 1, which consists of video game machine 2 and memory card 3, can hold beforehand in memory card 3 the device driver 150 that corresponds to an expansion device 5, and the desired device driver 150 can be transmitted to video game machine 2 and used.

### [Effects of the Embodiments]

As described in detail above, the entertainment system of this invention is an entertainment system that has a data processing device and a secondary memory that holds the data used by this data processing device, and the data processing device has a first connection means to which function expansion devices are connected; a second connection means to which the secondary memory is connected; a data supply means for supplying control programs and identification information that control the function expansion devices; a control means that transfers to and stores in the secondary memory control programs and identification information supplied by the data supply means; and a main memory means in which control programs and identification information are stored.

Thus, in the entertainment system of this invention, control programs and identification information that control function expansion devices are supplied to the data processing device, and by supplying these control programs and identification information to and holding them in the secondary memory, mutual connection and communication with many kinds of function expansion devices can be done, even in a data processing device having limited calculation resources, and by holding control programs beforehand in the secondary memory, one is spared the trouble of installing the control program in the main memory means every time an application program that uses a function expansion device is to be used on the data processing device.

Also, in the entertainment system of this invention, the secondary memory has a data storage means in which are held the control programs and identification information supplied from the data processing device, and held in this data storage means are multiple control programs and identification information corresponding to multiple function expansion devices.

In the entertainment system of this invention, by holding multiple control programs and identification information in a single secondary memory, the same secondary memory can be used even when multiple function expansion devices are to be connected together and used in the data processing device.

Also, in the entertainment system of this invention, identification information concerning function expansion devices is supplied from the function expansion devices to the data processing device via the first connection means, and among the control programs held in the data storage means, the control program is supplied that corresponds to the identification information from the function expansion devices.

In the entertainment system of this invention, because control programs are selected based on the identification information, only a single control program is supplied to a single hardware resource of the data processing device. Therefore without hardware resources being shared by multiple control programs, the data processing device does not misoperate due to the contention of a single hardware resource being acquired by multiple control programs.

The data supply method of the invention is a data supply method in which a secondary memory is detachably connected to, and performs data transmission and reception with respect to, a data processing device, and control programs that are supplied to the data processing device and control function expansion devices are supplied to and held in the secondary memory, and the control program that corresponds to the function expansion device connected to the data processing device is retrieved from among the control programs held in the secondary memory, and this control program is supplied to the data processing device.

The data supply method of this invention makes it possible to mutually connect and communicate with many types of function expansion devices, even if a data processing device has limited calculation resources.

In the data supply method of this invention, because a single control program is supplied to the data processing device from the secondary memory, only a single program is supplied to a single hardware resource of the data processing device. Therefore without hardware resources being shared by multiple control programs, the data processing device does not misoperate due to the contention of a single hardware resource being acquired by multiple control programs.

Also, in the data supply method of this invention, by holding control programs beforehand in the secondary memory, one is spared the trouble of installing the control program in the data processing device every time an application program is started that uses a function expansion device on the data processing device.

The data processor of this invention has a first connection means to which the externally provided function expansion devices are connected; a second connection means to which an externally provided secondary memory is connected; a data supply means for supplying control programs that control the function expansion devices; a control means that transfers to and stores in the secondary memory the control programs and identification information supplied by this data supply means; and a main memory means in which control programs and identification information are stored.

In the data processor of this invention, by supplying to and holding in the secondary memory the control programs and identification information, it is possible to mutually connect and communicate with many types of function expansion devices, even if it is a data processing device that has limited calculation resources, and by holding control programs beforehand in the secondary memory, one is spared the trouble of installing a control program in the main memory means every time an application program is started that uses a function expansion device.

Also, in the data processor of this invention, identification information concerning function expansion devices is supplied from the function expansion devices via the first connection means, and among the control programs held in the secondary memory, the control programs that correspond to the identification information from the function expansion devices are supplied.

In the data processor of this invention, because the control program is selected based on the identification information, only a single control program is supplied to a single hardware resource. Therefore without hardware resources being shared by multiple control programs, no misoperation occurs due to the contention of a single hardware resource being acquired by multiple control programs.

The data processing method of this invention is a data processing method in which data processing is done with the secondary memory connected detachably; control programs that control externally provided function expansion devices are supplied, these control programs are supplied to and held in the secondary memory, and control programs corresponding to the connected function expansion devices are retrieved from among the control programs held in the secondary memory and are stored.

Thus the data processing method of this invention makes it possible to mutually connect and communicate with many types of function expansion devices, even with limited calculation resources.

In the data processing method of this invention, because a single control program is supplied from the secondary memory, only a single program is supplied to a single hardware resource. Therefore without hardware resources being shared by multiple control programs, misoperation never arises due to the contention of a single hardware resource being acquired by multiple control programs.

Also, in the data processing method of this invention, by holding control programs beforehand in the secondary memory, one is spared the trouble of installing the control program every time an application program is started that uses a function expansion device.

The data storage controller of this invention is one that detachably connects to a data processing device; it has a data storage means that holds control programs that control externally provided function expansion devices and identification information that identifies the function expansion devices, and multiple control programs that correspond to multiple function expansion devices as well as identification information are held in the data storage means.

Thus, in the data storage controller of this invention, mutual connection and communication with many kinds of function expansion devices can be done, even in a data processing device having limited calculation resources, and by holding multiple programs, it can be used even when multiple function expansion devices are to be mutually connected to the data processing device. And by holding control programs beforehand, there is no longer any need to install the control program every time an application program is started in which the data processing device uses a function expansion device.

Also, the data storage controller of this invention has a data retrieval means that retrieves from among the control programs held in the data storage means the control programs that correspond to the function expansion devices, retrieves control programs corresponding to the function expansion devices by this data retrieval means from among the control programs stored in the data storage means, and supplies these control programs to the data processing device.

Thus, in the data storage controller of this invention, by supplying a single control program to the data processing device, only a single program is supplied to a single hardware resource of the data processing device. Therefore without hardware resources being shared by multiple control programs, there is no longer any misoperate due to the contention of a single hardware resource being acquired by multiple control programs.

The data storage control method of this invention is a data storage control method that stores data connected detachably with respect to the data processing device; it holds control programs that are supplied from the data processing device and control externally provided function expansion devices as well as identification information that identifies the function expansion devices, retrieves from among the held control programs those control programs that correspond to the function expansion devices connected to the data processing device, and supplies them to the data processing device.

Thus, in the data storage control method of this invention, mutual connection and communication with many kinds of function expansion devices can be done, even in a data processing device having limited calculation resources, and by holding control programs beforehand, one is spared the trouble of installing a control program on the data processing device every time an application program is started that uses a function expansion device on the data processing device.

Also, in the data storage control method of this invention, because a single control program is supplied to the data processing device, only a single program is supplied to a single hardware resource of the data processing device. Therefore without hardware resources being shared by multiple control programs, the data processing device does not misoperate due to the contention of a single hardware resource being acquired by multiple control programs.

## Claims

1. A data processor having a program data execution function and comprising:
a control means (21);
a main memory means (24) in which data is stored;
a first connection means (22) to which externally provided function expansion devices (5) are connectible;
a second connection means (23) to which an externally provided secondary memory (3) is connectible;
a data supply means (25) for supplying data that includes a plurality of control programs that respectively control said function expansion devices;
and wherein said control means (21) is arranged:
to transfer to and store in said secondary memory (3) the data that includes said control programs supplied by said data supply means (25);
to read via said first connection means (22) identification information for identifying a respective function expansion device (5) connected to said first connection means (22); and
in response to said identification information, to request from said secondary memory (3) via said second connection means (23) data including an associated control program for controlling the respective function expansion device (5) and to store the data including said control program in said main memory (24).

2. The data processor as claimed in claim 1, wherein
an application that uses said function expansion devices (5) is supplied by said data supply means (25), and said control means stores said application program in said main memory means (24).

3. The data processor as claimed in claim 1 or 2, wherein said control means (21) is arranged to establish a communication path with the secondary memory (3) by means of said request and said data including said associated control program is transmitted via said established communication path.

4. The data processor as claimed in claim 1, 2 or 3, wherein
said data supply means (25) is arranged to supply identification information for identifying respectively said function expansion devices (5), together with said control programs, and said control means (21) is arranged to transfer to and store in said secondary memory (3) said identification information with said control programs.

5. The data processor as claimed in claim 4, wherein
identification information concerning said function expansion devices (5) is supplied from said function expansion devices (5) via the first connection means (22), and among said control programs held in said secondary memory (3), the control program is supplied that corresponds to the identification information from said function expansion devices (5).

6. The data processor as claimed in claim 5, further comprising
a retrieval means (21,32) that retrieves from among said control programs held in said secondary memory (3) the control programs that correspond to said function expansion devices (5), and wherein:
identification information corresponding to the identification information from said function expansion devices (5) is retrieved by said retrieval means (21,32) from among said identification information held in said secondary memory (3), and control programs that correspond to this identification information are stored in said main memory means (24).

7. The data processor as claimed in claim 1, wherein
said secondary memory (3) is detachably connected via said second connection means (23).

8. The data processor as claimed in claim 1, wherein
data including said control programs is supplied from a detachably mounted recording medium (25).

9. An entertainment system comprising:
the data processor (20) as claimed in claim 1, and
a secondary memory (3) that holds the data used by said data processor, said secondary memory (3) being connected to the second connection means (23).

10. The entertainment system as claimed in claim 9, wherein
along with said control programs, identification information for identifying said function expansion devices (5) is supplied by said data supply means (25) to said data processor (20), and said control means (21) of said data processor (20) transfers said control programs and said identification information to, and stores said control programs and identification information in, said secondary memory (3) via said second connection means (23).

11. The entertainment system as claimed in claim 9, wherein
application programs that use said function expansion devices (5) are supplied to said data processor (20) by said data supply means (25), and said data processor (20) stores said application programs in said main memory means (24).

12. The entertainment system as claimed in claim 10, wherein
said secondary memory (3) includes a data storage means (31) in which are held said control programs and said identification information supplied from said data processor (20), and
said data storage means (31) holds multiple control programs and identification information corresponding to multiple function expansion devices (5).

13. The entertainment system as claimed in claim 12, wherein
identification information concerning said function expansion devices (5) is supplied from said function expansion devices (5) to said data processor (20) via said first connection means (22), and among said control programs held in said data storage means (31), a control program is supplied that corresponds to the identification information from said function expansion devices (5).

14. The entertainment system as claimed in claim 13, wherein
said data processor (20) further includes a retrieval means (21,32) that retrieves from among said control programs held in said data storage means (31) the control programs that correspond to said function expansion devices (5), and
identification information corresponding to the identification information from said function expansion devices (5) is retrieved by said data retrieval means (21) from among said identification information held in said data storage means (31), and control programs that correspond to this identification information are stored in said main memory means (24).

15. The entertainment system as claimed in claim 13, wherein
said secondary memory (3) includes a retrieval means (32) that retrieves from among said control programs held in said data storage means (31) the control programs that correspond to said function expansion devices (5), and
identification information corresponding to the identification information from said function expansion devices (5) is retrieved by said data retrieval means (32) from among said identification information held in said data storage means (31), and control programs that correspond to this identification information are supplied to said data processor (20).

16. The entertainment system as claimed in claim 9 wherein
said secondary memory (3) is detachably connected to said data processor (20) via said second connection means (23).

17. The entertainment system as claimed in claim 9, wherein
data including said control programs is supplied from a recording medium (25) detachably mounted on said data processor (20).

18. A data processing method employing the data processor as claimed in claim 1, the data processing method comprising the steps of:
supplying data that includes a plurality of control programs that respectively control the externally provided function expansion devices (5);
transferring to and storing in the secondary memory (3) the data that includes said control programs;
reading identification information for identifying a respective function expansion device (5); and
in response to said identification information, requesting from said secondary memory (3) data including an associated control program for controlling the respective function expansion device (5), and storing the data including said control program within the main memory of the data processor.

19. A data storage control method of claim 18, which includes holding identification information that identifies said function expansion devices, said identification information being supplied from said data processor (20).

20. A data storage controller in combination with the data processor (20) as claimed in any of claims 1 to 7, said data storage controller being detachably connected to said data processor (20) and comprising:
a data storage means (31) that holds control programs that control externally provided function expansion devices (5) and identification information that identifies the function expansion devices (5), said control programs and identification information being supplied from said data processor (20), and
multiple control programs that correspond to multiple function expansion devices (5) as well as identification information are held in said data storage means (31).

21. The data storage controller as claimed in claim 20, further **characterised by**:
a data retrieval means (21,32) that retrieves from among said control programs held in said data storage means (31) the control programs that correspond to said function expansion devices (5), and
control programs corresponding to said function expansion devices (5) are retrieved by said data retrieval means (21,32) from among said control programs held in said data storage means (31), and these control programs are supplied to said data processor (20).

## Patentansprüche

1. Datenprozessor mit einer Programmdaten-Ausführungsfunktion, der Folgendes aufweist:
- eine Steuerungseinrichtung (21);
- eine Hauptspeichereinrichtung (24), in der Daten abgespeichert werden;
- eine erste Verbindungseinrichtung (22), mit der extern vorhandene Funktionserweiterungsvorrichtungen (5) verbindbar sind;
- eine zweite Verbindungseinrichtung (23), mit der ein extern vorhandener Sekundärspeicher (3) verbindbar ist;
- eine Datenversorgungseinrichtung (25) zum Liefern von Daten, die mehrere Steuerungsprogramme enthalten, die jeweils die genannten Funktionserweiterungsvorrichtungen steuern;
- wobei die Steuerungseinrichtung (21) so aufgebaut ist, dass sie:
-- an den Sekundärspeicher (3) diejenigen Daten überträgt und in diesem abspeichert, die die von der Datenversorgungseinrichtung (25) gelieferten Steuerungsprogramme enthalten;
-- mittels der ersten Verbindungseinrichtung (22) Kennungsinformation liest, die dazu dient, eine jeweilige, mit der ersten Verbindungseinrichtung (22) verbundene Funktionserweiterungsvorrichtung (5) zu kennzeichnen; und
-- vom Sekundärspeicher (3) auf die Kennungsinformation hin, über die zweite Verbindungseinrichtung (23) Daten abruft, die ein zugeordnetes Steuerungsprogramm zum Steuern der jeweiligen Funktionserweiterungsvorrichtung (5) enthalten, und die dieses Steuerungsprogramm enthaltende Daten im Hauptspeicher (24) abspeichert.

2. Datenprozessor nach Anspruch 1, bei dem
- eine die Funktionserweiterungsvorrichtungen (5) verwendende Anwendung von der Datenversorgungseinrichtung (25) geliefert wird und die Steuerungseinrichtung dieses Anwendungsprogramm in der Hauptspeichereinrichtung (24) abspeichert.

3. Datenprozessor nach Anspruch 1 oder 2, bei dem die Steuerungseinrichtung (21) so ausgebildet ist, dass sie mittels der Anforderung einen Kommunikationspfad mit dem Sekundärspeicher (3) errichtet und die das zugeordnete Steuerungsprogramm enthaltenden Daten über den errichteten Kommunikationspfad übertragen werden.

4. Datenprozessor nach Anspruch 1, 2 oder 3, bei dem
- die Datenversorgungseinrichtung (25) so aufgebaut ist, dass sie Kennungsinformation zum jeweiligen Kennzeichnen der Funktionserweiterungsvorrichtungen (5) gemeinsam mit den Steuerungsprogrammen liefert, und die Steuerungseinrichtung (21) so aufgebaut ist, dass sie die Kennungsinformation mit den Steuerungsprogrammen an den Sekundärspeicher (3) überträgt und in diesem abspeichert.

5. Datenprozessor nach Anspruch 4, bei dem
- die Funktionserweiterungsvorrichtungen (5) betreffende Kennungsinformation von den Funktionserweiterungsvorrichtungen (5) über die erste Verbindungseinrichtung (22) geliefert wird, und von den im Sekundärspeicher (3) abgespeicherten Steuerungsprogrammen dasjenige Steuerungsprogramm geliefert wird, das der Kennungsinformation von den Funktionserweiterungsvorrichtungen (5) entspricht.

6. Datenprozessor nach Anspruch 5, ferner mit
- einer Abrufeinrichtung (21, 32), die von den im Sekundärspeicher (3) abgespeicherten Steuerungsprogrammen diejenigen abruft, die den Funktionserweiterungsvorrichtungen (5) entsprechen, und bei dem
- der Kennungsinformation von den Funktionserweiterungsvorrichtungen (5) entsprechende Kennungsinformation durch die Abrufeinrichtung (21, 32) aus der im Sekundärspeicher (3) abgespeicherten Kennungsinformation abgerufen wird und dieser Sekundärspeicher entsprechende Steuerungsprogramme in der Hauptspeichereinrichtung (24) abgespeichert werden.

7. Datenprozessor nach Anspruch 1, bei dem
- der Sekundärspeicher (3) über die zweite Verbindungseinrichtung (23) lösbar angeschlossen ist.

8. Datenprozessor nach Anspruch 1, bei dem
- die das Steuerungsprogramm enthaltende Daten von einem lösbar angebrachten Aufzeichnungsmedium (25) geliefert werden.

9. Unterhaltungssystem mit:
- einem Datenprozessor (20) nach Anspruch 1 und
- einem Sekundärspeicher (3), der die vom Datenprozessor verwendeten Daten enthält, und der mit der zweiten Verbindungseinrichtung (23) verbunden ist.

10. Unterhaltungssystem nach Anspruch 9, bei dem
- gemeinsam mit den Steuerungsprogrammen Kennungsinformation zum Kennzeichnen der Funktionserweiterungsvorrichtungen (5) durch die Datenversorgungseinrichtung (25) an den Datenprozessor (20) geliefert wird, und die Steuerungseinrichtung (21) des Datenprozessors (20) die Steuerungsprogramme und die Kennungsinformation über die zweite Verbindungseinrichtung (23) an den Sekundärspeicher (3) liefert und diese Steuerungsprogramme und die Sekundärspeicher in diesem abspeichert.

11. Unterhaltungssystem nach Anspruch 9, bei dem
- Anwendungsprogramme, die die genannten Funktionserweiterungsvorrichtungen (5) verwenden, durch die Datenversorgungseinrichtung (25) an den Datenprozessor (20) geliefert werden und dieser Datenprozessor (20) die Anwendungsprogramme in der genannten Hauptspeichereinrichtung (24) abspeichert.

12. Unterhaltungssystem nach Anspruch 10, bei dem
- der Sekundärspeicher (3) über eine Datenspeichereinrichtung (31) verfügt, in der die Steuerungsprogramme und die Kennungsinformation, wie vom Datenprozessor (20) geliefert, abgespeichert werden; und
- die Datenspeichereinrichtung (31) mehrere Steuerungsprogramme und Kennungsinformation enthält, die mehreren Funktionserweiterungsvorrichtungen (5) entsprechen.

13. Unterhaltungssystem nach Anspruch 12, bei dem
- den Funktionserweiterungsvorrichtungen (5) entsprechende Steuerungsprogramme über die erste Verbindungseinrichtung (21) von den Funktionserweiterungsvorrichtungen (5) an den Datenprozessor (20) geliefert werden und von den in der Datenspeichereinrichtung (31) abgespeicherten Steuerungsprogrammen ein solches Steuerungsprogramm geliefert wird, das der Kennungsinformation von den Funktionserweiterungsvorrichtungen (5) entspricht.

14. Unterhaltungssystem nach Anspruch 13, bei dem
- der Datenprozessor (20) ferner über eine Abrufeinrichtung (21, 32) verfügt, die von den in der Datenspeichereinrichtung (31) abgespeicherten Steuerungsprogrammen diejenigen abruft, die den Funktionserweiterungsvorrichtungen (5) entsprechen; und
- der Kennungsinformation von den Funktionserweiterungsvorrichtungen (5) entsprechende Kennungsinformation durch die Datenabrufeinrichtung (21) aus der in der Datenspeichereinrichtung (31) abgespeicherten Kennungsinformation abgerufen wird und dieser Kennungsinformation entsprechende Steuerungsprogramme in der Hauptspeichereinrichtung (24) abgespeichert werden.

15. Unterhaltungssystem nach Anspruch 13, bei dem
- der Sekundärspeicher (3) über eine Abrufeinrichtung (32) verfügt, die von den in der Datenspeichereinrichtung (31) abgespeicherten Steuerungsprogrammen diejenigen abruft, die den Funktionserweiterungsvorrichtungen (5) entsprechen; und
- der Kennungsinformation von den Funktionserweiterungsvorrichtungen (5) entsprechende Kennungsinformation durch die Datenabrufeinrichtung (32) aus der in der Datenspeichereinrichtung (31) abgespeicherten Kennungsinformation abgerufen wird und dieser Kennungsinformation entsprechende Steuerungsprogramme an den Datenprozessor (20) geliefert werden.

16. Unterhaltungssystem nach Anspruch 9, bei dem
- der Sekundärspeicher (3) über die zweite Verbindungseinrichtung (23) lösbar mit dem Datenprozessor (20) verbunden ist.

17. Unterhaltungssystem nach Anspruch 9, bei dem
- die das Steuerungsprogramm enthaltende Daten von einem Aufzeichnungsmedium (25) geliefert werden, das lösbar am Datenprozessor (20) angebracht ist.

18. Datenverarbeitungsverfahren unter Verwendung des Datenprozessors nach Anspruch 1, mit den folgenden Schritten:
- Liefern von Daten, die mehrere Steuerungsprogramme enthalten, die jeweils die extern vorhandenen Funktionserweiterungsvorrichtungen (5) steuern;
- Übertragen der die Steuerungsprogramme enthaltenden Daten an den Sekundärspeicher (3), und Abspeichern derselben in diesem;
- Lesen von Kennungsinformation zum Kennzeichnen einer jeweiligen Funktionserweiterungsvorrichtung (5); und
- Anfordern, auf die Kennungsinformation hin, aus dem Sekundärspeicher (3) solcher Daten, die ein zugeordnetes Steuerungsprogramm zum Steuern der jeweiligen Funktionserweiterungsvorrichtung (5) enthalten, und Abspeichern der das Steuerungsprogramm enthaltenden Daten im Hauptspeicher des Datenprozessors.

19. Datenspeicher-Steuerungsverfahren nach Anspruch 18, zu dem es gehört, Kennungsinformation abzuspeichern, die die Funktionserweiterungsvorrichtungen kennzeichnet, wobei diese Kennungsinformation vom Datenprozessor (20) geliefert wird.

20. Datenspeichercontroller in Kombination mit dem Datenprozessor (20) nach einem der Ansprüche 1 bis 7, wobei dieser Datenspeichercontroller lösbar mit dem Datenprozessor (20) verbunden ist und Folgendes aufweist:
- eine Datenspeichereinrichtung (31), die Steuerungsprogramme, die extern vorhandene Funktionserweiterungsvorrichtungen (5) steuern, und Kennungsinformation enthält, die die Funktionserweiterungsvorrichtungen (5) kennzeichnet, wobei die Steuerungsprogramme und die Kennungsinformation vom Datenprozessor (20) geliefert werden; und
- wobei mehrere Steuerungsprogramme, die mehreren Funktionserweiterungsvorrichtungen (5) entsprechen, sowie Kennungsinformation in der Datenspeichereinrichtung (31) abgespeichert sind.

21. Datenspeichercontroller nach Anspruch 20, ferner mit:
- einer Datenabrufeinrichtung (21, 32), die aus den in der Datenspeichereinrichtung (31) abgespeicherten Steuerungsprogrammen diejenigen abruft, die den Funktionserweiterungsvorrichtungen (5) entsprechen; und
- wobei den Funktionserweiterungsvorrichtungen (5) entsprechende Steuerungsprogramme durch die Datenabrufeinrichtung (21, 32) aus den in der Datenspeichereinrichtung (31) abgespeicherten Steuerungsprogrammen abgerufen werden und diese an den Datenprozessor (20) geliefert werden.

## Revendications

1. Processeur de données comportant une fonction d'exécution de données de programme et comprenant :
des moyens de commande (21);
des moyens de mémoire principale (24), dans lesquels des données sont mémorisées;
des premiers moyens de connexion (22) auxquels peut être connectés des dispositifs d'extension de fonctions (5) prévus de façon externe;
des seconds moyens de connexion (23), auxquels peuvent être connectés une mémoire secondaire (3) prévue de façon externe;
des moyens (25) de délivrance de données pour délivrer des données qui incluent une pluralité de programmes de commande qui commandent respectivement lesdits dispositifs d'extension de fonctions;
dans lequel lesdits moyens de commande (21) sont agencés :
pour transférer à et mémoriser dans ladite mémoire secondaire (3) les données qui incluent lesdits programmes de commande délivrés par lesdits moyens (25) de délivrance de données;
lire à l'aide desdits premiers moyens de connexion (22), une information d'identification servant à identifier un dispositif respectif d'extension de fonctions (5) connecté auxdits premiers moyens de connexion (22); et
en réponse à ladite information d'identification, demander à partir de ladite mémoire secondaire (3) par l'intermédiaire desdits seconds moyens de connexion (23) des données incluant un programme de commande associé pour commander le dispositif respectif d'extension de fonction (5) et mémoriser les données incluant ledit programme de commande dans ladite mémoire principale (24).

2. Processeur de données selon la revendication 1, dans lequel une application qui utilise lesdits dispositifs d'extension de fonctions (5) est délivrée par lesdits moyens de délivrance (25), et lesdits moyens de commande mémorisent ledit programme d'application dans lesdits moyens de mémoire principale (24).

3. Processeur de données selon la revendication 1 ou 2, selon lequel lesdits moyens de commande (21) sont agencés de manière à établir un trajet de communication avec la mémoire secondaire (3) à l'aide de ladite demande, et lesdites données incluant ledit programme de commande associé sont transmises par l'intermédiaire dudit trajet de communication établi.

4. Processeur de données selon la revendication 1, 2 ou 3, dans lequel lesdits moyens (25) de délivrance de données sont agencés de manière à supporter une information d'identification de délivrance pour l'identification respectivement desdits dispositifs d'extension de fonctions (5), conjointement avec lesdits programmes de commande, et lesdits moyens de commande (21) sont agencés de manière à transférer et mémoriser dans ladite mémoire secondaire (3) lesdites informations d'identification avec lesdits programmes de commande.

5. Processeur de données selon la revendication 4, dans lequel une information d'identification concernant lesdits dispositifs d'extension de fonctions (5) est délivrée par lesdits dispositifs d'extension de fonctions (5) par l'intermédiaire desdits premiers moyens de connexion (22), et parmi lesdits programmes de commande conservés dans ladite mémoire secondaire (3), le programme de commande, qui correspond à l'information d'identification provenant desdits dispositifs d'extension de fonctions (5), est délivré.

6. Processeur de données selon la revendication 5, comprenant en outre
des moyens de récupération (21,32), qui récupèrent, parmi lesdits programmes de commande conservés dans ladite mémoire secondaire (3), les programmes de commande qui correspondent audit dispositif d'extension de fonctions (5), et dans lequel :
une information d'idéntification correspondant à l'information d'identification provenant desdits dispositifs d'extension de fonctions (5) est récupérée par lesdits moyens de récupération (21,32) à partir de ladite information d'identification conservée dans ladite mémoire secondaire (3), et des programmes de commande, qui correspondent à cette information d'identification, sont mémorisés dans lesdits moyens de mémoire principale (24).

7. Processeur de données selon la revendication 1, dans lequel ladite mémoire secondaire (3) est connectée de façon amovible à l'aide desdits seconds moyens de connexion (23).

8. Processeur de données selon la revendication 1, dans lequel des données incluant lesdits programmes de commande sont délivrées à partir d'un support d'enregistrement (25) monté de façon amovible.

9. Système de divertissement, comprenant :
le processeur de données (20) tel que revendiqué dans la revendication 1, et
une mémoire secondaire (3) qui conserve les données utilisées par ledit processeur de données, ladite mémoire secondaire (3) étant connectée aux seconds moyens de connexion (23).

10. Système de divertissement selon la revendication 9, dans lequel parmi lesdits programmes de commande, une information d'identification pour identifier lesdits dispositifs d'extension de fonctions (5) est délivrée par lesdits moyens de délivrance de données (25) audit processeur de données (20), lesdits moyens de commande (21) dudit processeur de données (20) transfèrent lesdits programmes de commande et ladite information d'identification à ladite mémoire secondaire (3) et mémorisent lesdits programmes de commande et ladite information d'identification dans cette dernière, par l'intermédiaire desdits seconds moyens de connexion (23).

11. Système de divertissement selon la revendication 9, dans lequel des programmes d'application, qui utilisent lesdits dispositifs d'extension de fonctions (5), sont envoyés auxdits processeurs de données (20) par lesdits moyens de délivrance de données (25), et ledit processeur de données (20) mémorise lesdits programmes d'application dans lesdits moyens de mémoire principale (24).

12. Système de divertissement selon la revendication 10, dans lequel
ladite mémoire secondaire (3) inclut des moyens (31) de mémorisation de données, dans lesquels sont conservés lesdits programmes de commande et ladite information d'identification délivrés par ledit processeur de données (20), et
lesdits moyens (31) de mémorisation de données conservent de multiples programmes de commande et de multiples informations d'identification correspondant à de multiples dispositifs d'extension de fonctions (5).

13. Système de divertissement selon la revendication 12, dans lequel des informations d'identification concernant lesdits dispositifs d'extension de fonctions (5) sont délivrées par lesdits dispositifs d'extension de fonctions (5) audit processeur de données (20) par l'intermédiaire desdits premiers moyens de connexion (22), et parmi lesdits programmes de commande conservés dans lesdits moyens (31) de mémorisation de données, un programme de commande, qui correspond aux informations d'identification provenant desdits dispositifs d'extension de fonctions (5), est délivré.

14. Système de divertissement selon la revendication 13, dans lequel
ledit processeur de données (20) inclut en outre des moyens de récupération (21,32), qui reçoivent à partir desdits programmes de commande conservés dans lesdits moyens (31) de mémorisation de données, les programmes de commande qui correspondent auxdits dispositifs d'extension de fonctions (5), et
des informations d'identification correspondant aux informations d'identification délivrées par lesdits dispositifs d'extension de fonctions (5) sont récupérées par lesdits moyens (21) de récupération de données parmi lesdites informations d'identification conservées dans lesdits moyens (31) de mémorisation de données, et les programmes de commande, qui correspondent à ces informations d'identification, sont mémorisés dans lesdits moyens de mémoire principale (24).

15. Système de divertissement selon la revendication 13, dans lequel
ladite mémoire secondaire (3) inclut des moyens de récupération (32) qui récupèrent, à partir desdits programmes de commande conservés dans lesdits moyens (31) de mémorisation de données, les programmes de commande qui correspondent auxdits dispositifs d'extension de fonctions (5), et
des informations d'identification correspondant aux informations d'identification provenant desdits dispositifs d'extension de fonctions (5) sont récupérées par lesdits moyens de récupération (32) à partir de ladite information d'identification conservée dans lesdits moyens (31) de mémorisation de données, et des programmes de commande, qui correspondent à cette information d'identification, sont envoyés audit processeur de données (20).

16. Système de divertissement selon la revendication 9, dans lequel ladite mémoire secondaire (3) est connectée de façon amovible audit processeur de données (20) par l'intermédiaire desdits seconds moyens de connexion (23).

17. Système de divertissement selon la revendication 9, dans lequel des données incluant lesdits programmes de commande sont délivrées à partir d'un support d'enregistrement (25) monté de façon amovible sur ledit processeur de données (20).

18. Procédé de traitement de données utilisant le processeur de données selon la revendication 1, le procédé de traitement de données comprenant les étapes consistant à :
fournir des données qui incluent une pluralité de programmes de commande, qui commandent respectivement les dispositifs d'extension de fonctions (5) prévus de façon externe;
transférer à et mémoriser dans la mémoire secondaire (3) les données qui incluent lesdits programmes de commande;
lire des informations d'identification pour identifier un dispositif respectif d'extension de fonction (5); et
en réponse auxdites informations d'identification, demander à ladite mémoire secondaire (3) des données contenant un programme de commande associé pour commander le dispositif respectif d'extension de fonction (5) et mémoriser les données incluant ledit programme de commande dans la mémoire principale du processeur de données.

19. Procédé de commande de mémorisation de données selon la revendication 18, qui inclut la conservation des informations d'identification qui identifient lesdits dispositifs d'extension de fonctions, ladite information d'identification étant délivrée à partir dudit processeur de données (20).

20. Contrôleur de mémorisation de données en combinaison avec le processeur de données (20) selon l'une quelconque des revendications 1 à 7, ledit contrôleur de mémorisation de données étant connecté de façon amovible audit processeur de données (20) et comprenant :
des moyens (31) de mémorisation de données, qui conservent des programmes de commande, qui commandent des dispositifs d'extension de fonctions (5) prévus de façon externe, et des informations d'identification qui identifient les dispositifs d'extension de fonctions (5), lesdits programmes de commande et lesdites informations d'identification étant délivrés par ledit processeur de données (20), et
de multiples programmes de commande, qui correspondent à de multiples dispositifs d'extension de fonctions (5) ainsi que des informations d'identification sont conservés dans lesdits moyens (31) de mémorisation de données.

21. Contrôleur de mémorisation de données selon la revendication 20, **caractérisé en outre par** :
des moyens (21,32) de récupération de données, qui récupèrent, à partir dudit programme de commande conservé dans lesdits moyens (31) de mémorisation de données, des programmes de commande qui correspondent auxdits dispositifs d'extension de fonctions (5), et
des programmes de commande correspondant auxdits dispositifs d'extension de fonctions (5) sont récupérés par lesdits moyens (21,32) de récupération de données à partir desdits programmes de commande conservés dans lesdits moyens (31) de mémorisation de données, et ces programmes de commande sont envoyés audit processeur de données (20).
